# EUROPÄISCHE PATENTANMELDUNG

(11) **EP 4 435 994 A2**
(43) Veröffentlichungstag der Anmeldung: **25.09.2024**
(21) Anmeldenummer: 24185636.8
(22) Anmeldetag: 07.06.2018
(51) Int. Cl.: H02J 3/46

(54) **VERFAHREN ZUM EINSPEISEN ELEKTRISCHER LEISTUNG IN EIN ELEKTRISCHES VERSORGUNGSNETZ MITTELS EINER UMRICHTERGEFÜHRTEN EINSPEISEVORRICHTUNG**

(30) Priorität: 13.06.2017 DE 102017113006
(62) Teilanmeldung aus: 18729954.0
(71) Anmelder: Wobben Properties GmbH, 26607 Aurich (DE)
(72) Erfinder: Brombach, Johannes, 13437 Berlin (DE)
(74) Vertreter: Eisenführ Speiser

(57) **Zusammenfassung**

Die Erfindung betrifft ein Verfahren zum Einspeisen elektrischer Leistung in ein eine Netzspannung (U) mit einer Netzfrequenz (f) mit einer Netznennfrequenz aufweisendes elektrisches Versorgungsnetz (320), mittels einer umrichtergeführten Einspeisevorrichtung (300), insbesondere mittels eines Windparks (112) oder einer Windenergieanlage (100), wobei die Einspeisevorrichtung zum Einspeisen der elektrischen Leistung einen Einspeisestrom (I) als elektrischen Wechselstrom (I) mit einer Frequenz, Phase (ϕ) und mit einer Einspeisespannung (U) einspeist und wenigstens eine der Größen aus der Liste aufweisend Frequenz (f) des Einspeisestroms (I), Phase (ϕ) des Einspeisestroms (I), eingespeiste Leistung und Einspeisespannung (U) einstellbar ist, umfassend die Schritte Schätzen eines Umrichteranteils eines Netzabschnitts des elektrischen Versorgungsnetzes (320), wobei der Umrichteranteil ein Verhältnis mittels Umrichter eingespeister Leistung zu insgesamt eingespeister Leistung bezeichnet, und Steuern des Einspeisens der elektrischen Leistung in Abhängigkeit des geschätzten Umrichteranteils, wobei die eingespeiste Leistung mittels einer Leistungsregelung in Abhängigkeit einer Frequenzabweichung und/oder eines Frequenzgradienten verändert wird und die Leistungsregelung von dem geschätzten Umrichteranteil abhängt.

## Beschreibung

Die vorliegende Erfindung betrifft ein Verfahren zum Einspeisen elektrischer Leistung in ein elektrisches Versorgungsnetz mittels einer umrichtergeführten Einspeisevorrichtung, insbesondere mittels eines Windparks oder zumindest einer Windenergieanlage. Die Erfindung betrifft auch einen solchen Windpark und eine solche Windenergieanlage.

Besonders Windenergieanlagen und Windparks speisen elektrische Leistung umrichtergeführt in das elektrische Versorgungsnetz ein. Sie verwenden dafür Frequenzumrichter oder Frequenzwechselrichter, was vereinfachend als Umrichter oder Wechselrichter bezeichnet wird. Grundsätzlich können aber auch andere Erzeuger umrichtergeführt einspeisen, wie beispielsweise PV-Anlagen.

Das Einspeisen mittels umrichtergeführten Einspeisevorrichtungen ist bekannt und kann zunehmend auch zum Stützen des elektrischen Versorgungsnetzes verwendet werden. Die umrichtergeführten Einspeisevorrichtungen konzentrieren sich somit nicht unbedingt nur auf das bloße Einspeisen, sondern passen ihr Verhalten auch gegebenenfalls an besondere Netzzustände an. Besonders kommt eine frequenzabhängige Anpassung der eingespeisten Wirkleistung in Betracht und eine spannungsabhängige Veränderung der eingespeisten Blindleistung, wobei sich die Spannung hier auf die Netzspannung des elektrischen Versorgungsnetzes bezieht, oder eine dazu äquivalente bzw. proportionale Spannung.

Umrichtergeführte Einspeisevorrichtungen sind insoweit sehr schnelle Regelungseinrichtungen im elektrischen Versorgungsnetz. Sie können sehr schnell auf Veränderungen reagieren und dadurch regelnd bzw. steuernd und damit stützend eingreifen.

Mit zunehmendem Anteil solcher umrichtergeführten Einspeisevorrichtungen im elektrischen Versorgungsnetz kann aber das Problem auftreten, dass das elektrische Versorgungsnetz durch die vielen, gegebenenfalls schnell regelnden Einspeisevorrichtungen auch eine gewisse Unruhe im elektrischen Versorgungsnetz entsteht. Ein höherer Anteil umrichtergeführter Einspeisevorrichtungen bedeutet auch, dass der Anteil an Großkraftwerken, die mit direkt mit dem elektrischen Versorgungsnetz gekoppelten Synchrongeneratoren einspeisen, zurückgeht. Die träge Wirkung solcher Großkraftwerke bzw. ihrer großen Synchrongeneratoren kann dadurch geschwächt werden.

Außerdem arbeiten solche direkt gekoppelten Synchrongeneratoren prinzipbedingt spannungsprägend, wohingegen umrichtergeführte Einspeisevorrichtungen üblicherweise stromprägend arbeiten. Es kann somit zu einer Schwächung der Spannungsstützung kommen. Dabei kommt hinzu, dass umrichtergeführte Einspeisevorrichtungen üblicherweise dezentral aufgestellt sind. Auch das kann eine Spannungsstützung erschweren.

Grundsätzlich kann einem solchen Problem durch steuerungstechnische Anpassung der umrichtergeführten Einspeisevorrichtungen begegnet werden, oder es kann eine stabilere Netztopologie geschaffen werden. Allerdings ist es häufig so, dass die Netztopologie üblicherweise langsamer weiterentwickelt wird als regenerative Erzeugungseinheiten aufgestellt werden, die üblicherweise als umrichtergeführte Einspeisevorrichtungen ausgeführt sind bzw. solche umrichtergeführten Einspeisevorrichtungen zum Einspeisen verwenden. Aus diesem Grunde wird schon vorgeschlagen, umrichtergeführte Einspeisevorrichtungen an ein solches geschwächtes Netz regelungstechnisch anzupassen bzw. solche Eigenschaften zu berücksichtigen. Entsprechende Vorschläge sind beispielsweise in den beiden US-Anmeldungen US 2015/0280629 A1 und US 2015/0148974 A1 beschrieben.

Das Deutsche Patent- und Markenamt hat in der Prioritätsanmeldung zur vorliegenden Anmeldung folgenden Stand der Technik recherchiert: DE 10 2012 107 602 A1, DE 910 926 B, US 2015 /0 148 974 A1, US 2015 /0 280 629 A1 und EP 2 182 626 A1.

Der vorliegenden Erfindung liegt somit die Aufgabe zugrunde, zumindest eines der oben genannten Probleme zu adressieren. Insbesondere soll eine Lösung vorgeschlagen werden, die Veränderungen von Eigenschaften des elektrischen Versorgungsnetzes berücksichtigen können. Zumindest soll zu bisher bekannten Lösungen eine alternative Lösung vorgeschlagen werden.

Erfindungsgemäß wird ein Verfahren gemäß Anspruch 1 vorgeschlagen. Dieses Verfahren ist somit ein Verfahren zum Einspeisen elektrischer Leistung in ein elektrisches Versorgungsnetz mittels einer umrichtergeführten Einspeisevorrichtung. Insbesondere wird für die Einspeisevorrichtung vorgeschlagen, dass diese eine Windenergieanlage oder ein Windpark ist. Dabei ist unter einer umrichtergeführten Einspeisevorrichtung zu verstehen, dass diese mittels eines Umrichters oder Wechselrichters in das elektrische Versorgungsnetz einspeist, insbesondere also nicht über einen direkt mit dem elektrischen Versorgungsnetz gekoppelten Synchrongenerator.

Das elektrische Versorgungsnetz weist dabei eine Netzspannung mit einer Netzfrequenz und einer Netznennfrequenz auf. Die Netznennfrequenz ist somit die Netzfrequenz, die idealerweise verwendet werden soll, auf die also das elektrische Versorgungsnetz und damit alle daran angeschlossenen Verbraucher und Einspeiser ausgelegt sind. Als Netznennfrequenz kommen besonders 50 Hz oder 60 Hz in Betracht.

Die umrichtergeführte Einspeisevorrichtung speist an einem Netzanschlusspunkt in das elektrische Versorgungsnetz ein und die betrachtete Netzspannung ist besonders diejenige, die netzseitig an diesem Netzanschlusspunkt vorhanden ist und dort auch erfasst wird.

Die Einspeisevorrichtung speist zum Einspeisen elektrischer Leistung einen Einspeisestrom als Wechselstrom in das elektrische Versorgungsnetz ein. Dieser Wechselstrom weist eine Frequenz und eine Phase auf und wird mit einer Einspeisespannung eingespeist. Besonders liegt eine solche Einspeisespannung am Ausgang der umrichtergeführten Einspeisevorrichtung, also am Ausgang des Wechselrichters oder Umrichters, oder am Ausgang einer nachgeschalteten Drossel an. Über die Amplitude des Einspeisestroms und seine Phase in Bezug auf die Einspeisespannung kann die eingespeiste Leistung bestimmt werden. Besonders kann durch die Phase bzw. durch einen Phasenwinkel zwischen Einspeisestrom und Einspeisespannung eine Aufteilung in Wirkleistung und Blindleistung vorgenommen werden.

Es wird vorgeschlagen bzw. zugrundegelegt, dass die Frequenz des Einspeisestroms, die Phase des Einspeisestroms, die eingespeiste Leistung und die Einspeisespannung einstellbar sind. Die umrichtergeführte Einspeisevorrichtung ist also hinsichtlich dieser Größen regelbar bzw. steuerbar.

Das Einspeisen umfasst dann zunächst den Schritt, einen Umrichteranteil eines Netzabschnitts des elektrischen Versorgungsnetzes zu schätzen. Mit diesem Umrichteranteil wird ein Verhältnis umrichtergeführter Einspeisevorrichtungen zu nicht umrichtergeführten Einspeisevorrichtungen angegeben. Das Verhältnis bezieht sich dabei aber auf die eingespeiste Leistung. Er setzt nämlich die eingespeiste Leistung, die mittels umrichtergeführten Einspeisevorrichtungen, also mittels Umrichter oder Wechselrichter, eingespeist wurde, ins Verhältnis zu insgesamt eingespeister Leistung, also Leistung, die mittels umrichtergeführten Einspeisevorrichtungen eingespeist wird und zusätzlich die übrige Leistung, die besonders mittels direkt gekoppelten Synchrongeneratoren eingespeist wird. Dabei wird nicht nur die Leistung der vorliegenden umrichtergeführten Einspeisevorrichtung berücksichtigt, sondern die Leistung aller umrichtergeführten Einspeisevorrichtungen des betrachteten Netzabschnitts. Speisen also beispielsweise alle umrichtergeführten Einspeisevorrichtungen des betrachteten Netzabschnitts 4 GW ein und speisen außerdem in demselben Netzabschnitt Großkraftwerke mit direkt gekoppelten Synchrongeneratoren 4 GW ein, so ist der Umrichteranteil 0,5 bzw. 50 %.

Es wird dann vorgeschlagen, das Einspeisen der elektrischen Leistung in Abhängigkeit des geschätzten Umrichteranteils zu steuern.

Es liegt hier also zunächst der Gedanke zugrunde, dass überhaupt eine Bestandsanalyse gemacht wird, wie der Umrichteranteil im elektrischen Versorgungsnetz ist. Daraus kann abgeleitet werden, zu was für einem grundsätzlichen Netzverhalten der betrachtete Netzabschnitt neigt. Es geht hier nicht unbedingt darum, einen solchen Anteil auf 1 % genau zu schätzen, sondern das zu erwartende Gesamtverhalten zu beurteilen. Besonders ist eine erste wichtige Frage, ob in dem Netzabschnitt direkt gekoppelte Synchrongeneratoren dominieren, oder ob umrichtergeführte Einspeisevorrichtungen dominieren. Davon abhängig kann eine Steuerung angepasst werden. Besonders dann, wenn direkt gekoppelte Synchrongeneratoren dominieren, kann grundsätzlich davon ausgegangen werden, dass diese auch eine adäquate Spannungsstützung und Frequenzstützung über die jeweilige Schwungmasse erreichen. Dominieren aber umrichtergeführte Einspeisevorrichtungen, so kann es sinnvoll sein, dass die umrichtergeführten Einspeisevorrichtungen, zumindest einige von Ihnen, Stützaufgaben übernehmen und beispielsweise angelehnt an das Verhalten eines direkt gekoppelten Synchrongenerators gesteuert werden.

Das Schätzen eines Umrichteranteils eines Netzabschnitts, was auch als Umrichteranteil in dem Netzabschnitt bezeichnet werden kann, kann beispielsweise so durchgeführt werden, dass bekannte Informationen über die Netztopologie dieses Netzabschnitts verwendet werden und zusammen mit erfassten Leistungsdaten oder zusammen mit bereitgestellten Leistungsdaten der Umrichteranteil geschätzt wird. Beispielsweise kann die Nennleistung der an den Netzabschnitt angekoppelten umrichtergeführten Einspeisevorrichtungen bekannt sein. Sind diese umrichtergeführten Einspeisevorrichtungen nur Windenergieanlagen oder nur Windparks, so kann besonders bei einem örtlich abgeschlossenen Gebiet aus der Leistung einer oder mehrerer solcher umrichtergeführten Einspeisevorrichtungen auf die insgesamt eingespeiste Leistung der umrichtergeführten Einspeisevorrichtungen geschlossen werden. Wird also beispielsweise ein Windpark von mehreren Windparks, die an den betrachteten Netzabschnitt angeschlossen sind, betrachtet und speist dieser Windpark etwa mit 50 % seiner Nennleistung ein, kann etwa geschätzt werden, dass alle anderen Windparks dieses Netzabschnitts, also alle anderen in der Nähe stehenden Windparks, ebenfalls etwa mit 50 % ihrer Nennleistung einspeisen und dieser Wert, also 50 % der gesamten Nennleistung aller dieser an diesem Netzabschnitt angeschlossenen Windparks, kann als eingespeiste Leistung der umrichtergeführten Einspeisevorrichtungen dieses Netzabschnitts betrachtet werden. Über die eingespeiste Leistung der Großkraftwerke mit direkt gekoppeltem Synchrongenerator kann häufig eine Information von dem Netzbetreiber erhalten werden. Im Übrigen kommt natürlich auch für die Windparks in Betracht, dass deren Leistung über einen Datenaustausch, beispielsweise über ein sogenanntes SCADA-System, bekannt sind.

Es kommen aber auch andere Möglichkeiten in Betracht, wie beispielsweise, aus Netzzuständen auf die entsprechenden Anteile zu schließen.

Vorzugsweise wird vorgeschlagen, dass eine zyklische Änderung der Netzfrequenz nach Amplitude und/oder Zyklusdauer erfasst wird und der Umrichteranteil in Abhängigkeit der erfassten Amplitude und/oder der erfassten Zyklusdauer geschätzt wird. Hierzu wurde erkannt, dass eine solche zyklische Änderung der Netzfrequenz einen Aufschluss über einen Umrichteranteil im elektrischen Versorgungsnetz geben kann. Durch diese Betrachtung wird im Übrigen quasi ganz natürlich eine Begrenzung auf einen Netzabschnitt vorgenommen, jedenfalls dann, wenn das elektrische Versorgungsnetz sehr groß ist, wie beispielsweise das europäische Verbundnetz.

Vorzugsweise wird dabei der Umrichteranteil umso größer geschätzt, je größer die Amplitude der zyklischen Änderung ist. Außerdem oder alternativ wird der Umrichteranteil umso größer geschätzt, je kleiner die Zyklusdauer ist. Es kann also anhand der Amplitude der zyklischen Änderung der Umrichteranteil geschätzt werden. Dabei wurde erkannt, dass die Netzfrequenz mit einer umso größeren Amplitude schwingt, umso größer der Umrichteranteil im Netz ist.

Ebenso wurde erkannt, dass die Zyklusdauer umso kleiner ist, umso größer der Umrichteranteil im Netz ist. Bei hohem Umrichteranteil schwingt die Netzfrequenz umso schneller.

Diese beiden Kriterien können auch zugleich betrachtet werden und insbesondere wird dazu vorgeschlagen, einen Quotienten der Amplitude der Änderung zur Zyklusdauer der Änderung zugrunde zu legen. Umso größer dieser Quotient ist, umso größer ist auch der Umrichteranteil zu schätzen. Dieser Quotient hat besonders den Vorteil, dass eine große Amplitude auf einen hohen Umrichteranteil deutet und eine kleine Zyklusdauer der Änderung ebenfalls auf einen hohen Umrichteranteil deutet. Durch den Quotienten wird also in diesem Fall eines hohen Umrichteranteils eine eher große Amplitude durch eine eher kleine Zyklusdauer geteilt, so dass die Aussagekraft beider Größen sich gegenseitig unterstützt.

Zur konkreten Auswertung können beispielsweise Erfahrungswerte oder Netzsimulationen zugrunde gelegt werden.

Vorzugsweise wird vorgeschlagen, dass als Schätzung des Umrichteranteils zwischen einem hohen und einem niedrigen Umrichteranteil unterschieden wird. Dabei wird ein hoher Umrichteranteil geschätzt, wenn die Amplitude der zyklischen Änderung größer als eine vorgegebene Amplitudengrenze ist. Außerdem oder alternativ wird vorgeschlagen, dass ein hoher Umrichteranteil geschätzt wird, wenn die Zyklusdauer kleiner als eine vorgegebene Zyklusdauergrenze ist. Somit können über diese Grenzen klar definierbare Kriterien festgelegt werden. Dabei ist zu beachten, dass das Ergebnis dennoch eine Schätzung ist. Es können also geringe Abweichungen auftreten. Dies kann in der jeweils zu wählenden Grenze, also der Amplitudengrenze oder der Zyklusdauergrenze, berücksichtigt werden. Die Grenze kann also so gelegt werden, dass erst dann von einem hohen Umrichteranteil auszugehen ist, wenn dieser auch tatsächlich signifikant hoch ist und zu einer Anpassung der Steuerung zu raten ist.

Auch hier können beide Kriterien kombiniert werden und für die Berücksichtigung eines Quotienten der Amplitude der Änderung zur Zyklusdauer der Änderung eine Quotientengrenze vorgegeben werden.

Gemäß einer Ausführungsform wird vorgeschlagen, dass eine Häufigkeit oder Häufigkeitsdichte der Frequenz oder eines Frequenzgradienten erfasst wird, und dass der Umrichteranteil in Abhängigkeit der erfassten Häufigkeit bzw. Häufigkeitsdichte geschätzt wird. Beispielsweise kann ein relevanter Frequenzbereich um die Nennfrequenz in 0,05 Hz - Abschnitte unterteilt werden. Für jeden 0,05 Hz - Abschnitt können dann die Zeitdauern aufaddiert werden, für die die Frequenz in den entsprechenden 0,05 Hz - Abschnitten aufgetreten ist. Dadurch ergibt sich für jeden der 0,05 Hz - Abschnitte ein absoluter Wert, z.B. in Sekunden, und dieser kann beispielsweise als prozentualer Wert bezogen auf die gesamte Testdauer angegeben werden. Diese Werte können dann entsprechend für die jeweiligen 0,05 Hz - Abschnitte in einer entsprechenden Graphik aufgetragen werden. Dabei ist zu erwarten, dass sich beispielsweise eine einer Gaußschen Glockenkurve ähnelnde Kurve ergibt. Diese Kurve gibt dann die Häufigkeit der Frequenz an.

Stattdessen kann auch eine Häufigkeitsdichte aufgenommen werden, die im Ergebnis dieser Häufigkeit entspricht, aber besonders ohne eine Aufteilung in diskrete Abschnitte auskommt, also ohne eine Aufteilung in die exemplarisch genannten 0,05 Hz - Abschnitte. Die Häufigkeitsdichte der Frequenz ist die Häufigkeit geteilt durch die Breite des Frequenzabschnittes, für den sie festgestellt wurde. Das obige Beispiel kann insoweit in eine Häufigkeitsdichte umgerechnet werden, wenn die jeweiligen Häufigkeiten durch 0,05 Hz geteilt werden, denn dies ist genau die Breite des jeweiligen Frequenzabschnitts, also die Breite des jeweiligen 0,05 Hz - Abschnitts.

Dabei ergibt sich qualitativ eine ähnliche Kurve und auch hier ist somit eine Glockenkurve ähnlich einer Gaußschen Glockenkurve zu erwarten. Die Art dieser Kurve, also insbesondere die Art dieser Glocke kann Aufschluss darüber geben, wie groß der Umrichteranteil im Netz ist. Insbesondere deutet eine eher schmale Glockenkurve auf einen geringen Umrichteranteil im Netz hin, als eine breite, flache Glockenkurve. In jedem Fall wäre aber die Mitte der Glockenkurve etwa bei der Nennfrequenz zu erwarten. Besonders im Europäischen Verbundnetz wird diese Erwartung dadurch erfüllt, dass das Europäische Verbundnetz grundsätzlich so gesteuert wird, dass die Frequenz im Mittel exakt 50 Hz beträgt.

Statt der Frequenz kann ein Frequenzgradient betrachtet werden. Der Frequenzgradient ist die zeitliche Ableitung der Frequenz und auch dazu kann eine Häufigkeit oder Häufigkeitsdichte aufgenommen werden. Grundsätzlich sind bei der Betrachtung der Häufigkeit oder Häufigkeitsdichte des Frequenzgradienten dieselben Auswertekriterien anwendbar, wie bei der Betrachtung der Häufigkeit oder Häufigkeitsdichte der Frequenz. Insoweit gelten die Ausführungen zur Frequenz für die Betrachtung des Frequenzgradienten sinngemäß, soweit nichts anderes angegeben ist bzw. nicht offensichtlich ein anderer Zusammenhang zugrundeliegt. Eine Betrachtung basierend auf dem Frequenzgradienten kann aber sensitiver sein, als die Betrachtung basierend auf der Frequenz.

Eine Ausführungsform, die diese Häufigkeit oder Häufigkeitsdichte auswertet, geht davon aus, dass die Häufigkeit bzw. Häufigkeitsdichte eine Häufigkeitsfunktion in Abhängigkeit der Frequenz bildet. Das entspricht im Grunde der bereits genannten zu erwartenden glockenähnlichen Kurve. Diese Häufigkeitsfunktion, die in der veranschaulichend genannten Darstellung zu einer Kurve, insbesondere glockenähnlichen Kurve führt, weist in einem Bereich einer Hauptfrequenz einen Häufigkeitsmaximalwert auf. Die Hauptfrequenz ist insbesondere die Netznennfrequenz, kann davon aber auch abweichen. Im bereits genannten Beispiel des Europäischen Verbundnetzes ist dies 50 Hz. Im USamerikanischen Netz wären es 60 Hz, um ein weiteres Beispiel zu nennen.

Die Häufigkeitsfunktion steigt von einer vorgegebenen Anfangsfrequenz, die kleiner als die Hauptfrequenz ist, zum Bereich der Hauptfrequenz an. Für eine Hauptfrequenz von 50 Hz kann die Anfangsfrequenz beispielsweise 48 Hz betragen.

Vom Bereich der Hauptfrequenz fällt die frequenzabhängige Häufigkeitsfunktion zu einer vorgegebenen Endfrequenz ab, die größer als die Hauptfrequenz ist. Diese vorgegebene Endfrequenz kann beispielsweise im Falle einer Hauptfrequenz von 50 Hz einen Wert von 52 Hz betragen. Die Häufigkeitsfunktion steigt also von der Anfangsfrequenz zur Hauptfrequenz an und fällt von dort wieder zur Endfrequenz ab.

Zu einer unteren Referenzfrequenz, die größer als die Anfangsfrequenz und kleiner als die Hauptfrequenz ist, weist diese frequenzabhängige Häufigkeitsfunktion einen unteren Häufigkeitsreferenzwert auf. Dieser untere Häufigkeitsreferenzwert liegt somit zwischen der vorgegebenen Anfangsfrequenz und der Hauptfrequenz. Außerdem weist die frequenzabhängige Häufigkeitsfunktion zu einer oberen Referenzfrequenz, die größer als die Hauptfrequenz und kleiner als die Endfrequenz ist, einen oberen Häufigkeitsfrequenzwert auf. Zwischen der Hauptfrequenz und der Endfrequenz ist also auch ein Häufigkeitsreferenzwert vorgesehen.

Diese frequenzabhängige Häufigkeitsfunktion steigt also von der Anfangsfrequenz über die untere Referenzfrequenz zur Hauptfrequenz an und fällt von dort wieder über die untere Referenzfrequenz zur Endfrequenz ab.

Für diese frequenzabhängige Häufigkeitsfunktion wird nun der Umrichteranteil in Abhängigkeit des Häufigkeitsmaximalwertes geschätzt. Der Häufigkeitsmaximalwert gibt also Aufschluss darüber, ob der Umrichteranteil im Netz bzw. Netzabschnitt hoch oder klein ist. Insbesondere ist bei einem hohen Häufigkeitsmaximalwertes von einem geringen Umrichteranteil auszugehen und umgekehrt.

Außerdem oder alternativ wird vorgeschlagen, den Umrichteranteil gemäß einer Variante in Abhängigkeit eines Abstandes zwischen der unteren und oberen Referenzfrequenz geschätzt wird, die sich jeweils bei einem vorgegebenen unteren bzw. oberen Häufigkeitsreferenzwert einstellt, wobei der untere und obere Häufigkeitsreferenzwert gleich sein können. Mit anderen Worten wird hier durch diesen Abstand zwischen den beiden Referenzfrequenzen die Breite der Häufigkeitsfunktion zu Grunde gelegt. Da sich die Breite der Kurve mit der Höhe, also dem jeweiligen Häufigkeitswert, ändert, wird diese Höhe durch den oberen und unteren Häufigkeitsreferenzwert festgelegt, wenn diese gleich sind. Dadurch kann diese Breite ein reproduzierbares Kriterium bilden.

Der Umrichteranteil wird dann abhängig eines Abstandes dieser beiden Werte, also der Abstand zwischen der oberen und unteren Referenzfrequenz geschätzt. Der Umrichteranteil ist dabei umso größer, bzw. wird umso größer geschätzt, je breiter der Abstand dieser beiden Referenzfrequenzen ist.

Wenn die beiden Häufigkeitswerte nicht gleich sind, kann dennoch der Abstand der beiden Frequenzwerte als Kriterium dienen, lediglich auf die anschauliche Erklärung der Breite der Kurve muss dann verzichtet werden.

Alternativ wird vorgeschlagen, dass der Umrichteranteil in Abhängigkeit des unteren und/oder oberen Häufigkeitsreferenzwertes geschätzt wird, der sich jeweils für eine vorgegebene untere bzw. obere Referenzfrequenz einstellt. Hier wird im Grunde der umgekehrte Ansatz gewählt, indem eine der beiden Referenzfrequenzen vorgegeben wird und der zugeordnete Häufigkeitswert, der hier als Häufigkeitsreferenzwert bezeichnet wird, ein reproduzierbares Kriterium bildet.

Hierbei kann somit die Höhe des einen oder beider Häufigkeitsreferenzwerte als Kriterium zum Schätzen eines Umrichteranteils im Netz zugrundegelegt werden. Es können auch beide Werte zugleich betrachtet werden, indem bspw. ein Mittelwert gebildet wird.

Inhaltlich wird für die Bewertung bzw. Schätzung vorgeschlagen, dass der Umrichteranteil umso größer geschätzt wird, je geringer der Häufigkeitsmaximalwert ist. Außerdem oder alternativ wird der Umrichteranteil umso größer geschätzt, je größer der Abstand zwischen der oberen und unteren Referenzfrequenz ist bzw. wird für die Alternative vorgeschlagen, dass der Umrichteranteil umso größer geschätzt wird, je größer der obere bzw. der untere Häufigkeitsreferenzwert ist.

Hierdurch können feste Vergleichswerte festgelegt werden, so dass auch in einem Computer implementiert eine entsprechende Auswertung vorgenommen werden kann. Es braucht nur die Häufigkeit bzw. das Häufigkeitsspektrum aufgenommen zu werden, woraus sich die genannte frequenzabhängige Häufigkeitsfunktion ergibt. Für diese Häufigkeitsfunktion brauchen dann nur die genannten Kriterien bzw. zumindest eines davon, ausgewertet zu werden.

Gemäß einer Ausführungsform wird vorgeschlagen, dass als Schätzung des Umrichteranteils zwischen einem hohen und einem niedrigen Umrichteranteil unterschieden wird. Dazu wird ein hoher Umrichteranteil geschätzt, wenn der Häufigkeitsmaximalwert unterhalb eines vorgegebenen Häufigkeitsmaximalwertes liegt. Damit kann durch Auswertung einer frequenzabhängigen Häufigkeitsfunktion auf einfache Art und Weise durch Vergleich mit dem vorgegebenen Häufigkeitsgrenzwert zumindest diese Unterteilung zwischen hohem und niedrigem Umrichteranteil durchgeführt werden.

Außerdem oder alternativ wird ein hoher Umrichteranteil geschätzt, wenn der Abstand zwischen der unteren und oberen Referenzfrequenz größer als ein vorgegebener Referenzabstand ist. Auch hier kann auf einfache Art und Weise und auch auf einem Computer implementierbar die genannte Funktion ausgewertet werden, indem einfach ein Vergleich zwischen dem vorgegebenen Referenzabschnitt durchgeführt wird.

Bzw. ist für die entsprechende alternative Ausführungsform vorgesehen, dass ein hoher Umrichteranteil geschätzt wird, wenn der obere und/oder untere Häufigkeitsreferenzwert oberhalb eines vorgegebenen Basisgrenzwertes liegt. Hier wird also eine der beiden Amplituden der Häufigkeitsfunktion mit einem vorgegebenen Basisgrenzwert verglichen. Als Amplituden werden die Werte der Häufigkeitsfunktion bei der unteren bzw. oberen Referenzfrequenz verwendet. Hierdurch kann ein einfaches und eindeutiges Prüfkriterium vorgegeben werden.

Es kommt auch in Betracht, diese Kriterien zu kombinieren. Jedes Kriterium kann eine Schätzung liefern, ob ein hoher oder niedriger Umrichteranteil vorliegt. Insoweit können grundsätzlich gegenläufige Auswertungsergebnisse herauskommen. In dem Fall wäre eher davon auszugehen, dass der Umrichteranteil etwa eine mittlere Höhe aufweist. Sofern bei den Kriterien aber dasselbe Auswertungsergebnis resultiert, kann von einem besonders gesicherten Wert bzw. besonders gesicherten Ergebnis ausgegangen werden. Außerdem kann dann auch angenommen werden, dass der Umrichteranteil besonders hoch bzw. besonders niedrig ist.

Gemäß einer weiteren Ausführungsform wird vorgeschlagen, dass für die Häufigkeit oder Häufigkeitsdichte eine Referenzfunktion vorgegeben wird und der Umrichteranteil in Abhängigkeit einer Abweichung der Häufigkeitsfunktion von dieser Referenzfunktion geschätzt wird. Die Referenzfunktion gibt somit eine Häufigkeit oder Häufigkeitsdichte für einen bekannten Umrichteranteil wieder und dient dann als Orientierung. Die Häufigkeitsfunktion ist insoweit die jeweils aktuell aufgenommene Häufigkeit bzw. Häufigkeitsdichte in Abhängigkeit der Frequenz. Bei normierten Funktionen kann der Vergleich eines charakteristischen Wertes ausreichen, z.B. eine maximale Höhe.

Es wurde nun erkannt, dass die Häufigkeitsfunktion dazu neigt, mit höherem Umrichteranteil flacher zu verlaufen. Besonders bei Betrachtung der Häufigkeitsdichte oder einer normierten Häufigkeit ist zu erwarten, dass die Flächen beider Kurven, also der Referenzfunktion und auch der aktuell aufgenommenen Häufigkeitsfunktion, gleich groß sind. Eine flachere Kurve ist insoweit eine, die im Bereich der Anfangsfrequenz und der Endfrequenz höhere Werte als die Referenzfunktion aufweist, im Bereich der Hauptfrequenz aber niedrigere Werte aufweist. So kann durch einen Vergleich dieser beiden Funktionen, also der Häufigkeitsfunktion und der Referenzfunktion eine Aussage getroffen werden. Insbesondere können diese beiden Funktionen beispielsweise übereinandergelegt werden und dann ist ein etwaiger flacherer Verlauf der aufgenommenen Häufigkeitsfunktion gegenüber der Referenzfunktion gut erkennbar. Die Abweichungen sind aber auch anderweitig und auch gut durch Rechenprogramme automatisiert auswertbar.

Gemäß einer weiteren Ausführungsform wird vorgeschlagen, dass als Referenzfunktion eine Häufigkeitsfunktion für einen Umrichteranteil von null gewählt wird. Es wird also ein Umrichteranteil von null als Ausgangspunkt zugrundegelegt. Eine solche Referenzfunktion, also eine Häufigkeitsfunktion für diese vorgegebene Situation, kann durch Simulationen vorher geschätzt werden. Es kommt aber auch in Betracht, dass an dem betreffenden Netzanschlusspunkt, an dem diese Häufigkeitsfunktion untersucht werden soll, eine Situation abgewartet wird, in der der Umrichteranteil null oder nahezu null ist. Beispielsweise liegt regelmäßig eine solche Situation vor, wenn Windstille herrscht oder zumindest nur ein so schwacher Wind weht, dass übliche Windenergieanlagen nicht starten und gleichzeitig beispielsweise Nacht ist, so dass auch keine PV-Anlagen in das zu untersuchende elektrische Versorgungsnetz einspeisen.

Von dieser Referenzfunktion kann dann ausgegangen werden und jegliche Indizien, die auch schon oben geschildert wurden, die auf einen höheren Umrichteranteil hindeuten, können dann immer in Bezug auf diese Referenzfunktion angewendet werden, die einen Umrichteranteil von null wiedergibt. Je stärker die betreffenden Indizien sind, also um ein Beispiel zu nennen, je höher der Häufigkeitsmaximalwert ist, umso größer ist der Umrichteranteil. Dazu können auch Zwischenwerte oder Zwischenfunktionen aufgenommen werden, denen ein von null verschiedener Umrichteranteil zugeordnet werden kann, z. B. 10 % und ein weiterer Wert oder eine weitere Zwischenreferenzfunktion für 20 % u.s.w.. Davon abhängig kann dann auch eine quantitative Aussage über den Umrichteranteil im Netz gemacht werden.

Grundsätzlich werden erfindungsgemäß immer Schätzungen vorgeschlagen, wobei auch kleinere Fehler in Kauf genommen werden können. Besonders ist zu beachten, dass beispielsweise ein hoher Umrichteranteil nicht als ganz so hoch geschätzt wird, wie er tatsächlich ist, wenn dabei umrichtergeführte Einspeisevorrichtungen darunter sind, die sich durch eine spezielle Steuerung, wie eine Synchronmaschine, verhalten, die also eine Synchronmaschine emulieren. In diesem Fall wäre ein solcher Schätzfehler aber auch gewollt bzw. vorteilhaft, weil schließlich eine umrichtergeführte Einspeisevorrichtung, die sich wie eine Synchronmaschine verhält, auch keinen oder weniger Ausgleich benötigt.

Außerdem oder alternativ wird vorgeschlagen, dass als eine Differenzfunktion eine Differenz zwischen der Häufigkeitsfunktion und der Referenzfunktion gebildet wird. Diese Differenzfunktion zeigt somit in den Bereichen, in denen sie positiv ist, wie stark die aufgenommene Häufigkeitsfunktion oberhalb der Referenzfunktion liegt. Das kann zur Beurteilung des Umrichteranteils ausgewertet werden. Dazu wird vorgeschlagen, dass die Differenzfunktion für Frequenzbereiche unterhalb der unteren Referenzfrequenz und oberhalb der oberen Referenzfrequenz zu einem Abweichungsintegral aufintegriert wird. Es wird also nur dieser Teil der Differenzfunktion aufaddiert. Eine Aufintegrierung der gesamten Differenzfunktion sollte ohnehin den Wert null aufweisen.

Gemäß einer Variante wird vorgeschlagen, die Differenzfunktion von einer niedrigen Frequenz, bspw. 0Hz, insbesondere 40Hz oder 45Hz bei 50Hz Nennfrequenz bzw. 50Hz oder 55 Hz bei 60Hz Nennfrequenz, aufzuintegrieren, bis sich ein vorbestimmter Vergleichsdifferenzwert ergibt, und dazu den Frequenzwert zu betrachten, bei dem der Vergleichsdifferenzwert erreicht wird. Vorzugsweise wird der Umrichteranteil um so größer geschätzt, je kleiner dieser Frequenzwert ist. Als Vergleichsdifferenzwert kann bspw. 10% des Integralwertes der Referenzfunktion verwendet werden. Es kommt auch in Betracht, die Differenzfunktion sinngemäß von einem hohen Frequenzwert, also bspw. von doppelter Nennfrequenz (100Hz bzw. 120Hz), insbesondere 60Hz oder 55Hz bei 50Hz Nennfrequenz bzw. 70Hz oder 65 Hz bei 60Hz Nennfrequenz abwärts aufzuintegrieren und den dort erreichten Frequenzwert zu betrachten, bei dem das Integral den Vergleichsdifferenzwert erreicht.

Gemäß einer weiteren Variante wird vorgeschlagen, ein Integral zwischen zwei vorbestimmten Frequenzwerten zu betrachten und mit einem Vergleichsintegral zu vergleichen. Vorzugsweise liegen diese Frequenzwerte nahe der Nennfrequenz und nahe bei einander. Bspw. können dafür als Werte 49,8 Hz und 49,9 Hz verwendet werden, wenn die Nennfrequenz 50Hz beträgt.

Außerdem oder alternativ wird vorgeschlagen, dass nur die positiven Bereiche der Differenzfunktion zu dem Abweichungsintegral aufintegriert werden. Setzt man bei den beiden Schnittpunkten der aufgenommenen Häufigkeitsfunktion mit der Referenzfunktion die untere bzw. obere Referenzfrequenz an, so spezifiziert dies genau die Stelle, an der die Differenzfunktion von ihrem positiven in ihren negativen Bereich wechselt bzw. umgekehrt. In diesem Fall entsprechen sich die beiden genannten Varianten der Auswertung der Differenzfunktion.

Es wird dann vorgeschlagen, dass der Umrichteranteil in Abhängigkeit des Abweichungsintegrals geschätzt wird. Um auch eine quantitative Einschätzung vornehmen zu können, können entsprechende Wertebereiche für dieses Abweichungsintegral vorgegeben bzw. aufgestellt werden. Solche Werte können beispielsweise über Simulationen vorbestimmt werden. Besonders bei der Betrachtung einer Häufigkeitsdichte oder einer normierten Häufigkeit, können hier absolute Werte zugrundegelegt werden, bspw. 0,2 oder 0,3 für einen mittleren Umrichteranteil.

Gemäß einer Ausführungsform wird vorgeschlagen, dass abhängig von dem Wert des Abweichungsintegrals ein Umrichteranteil so geschätzt wird, dass er bei einem Abweichungsintegral mit dem Wert null ebenfalls den Wert null aufweist und bei einem Wert des Abweichungsintegrals von 0,5 den Wert 100 % aufweist und hier Werte dazwischen von einem linearen Zusammenhang zwischen dem Umrichteranteil und dem Wert des Abweichungsintegrals ausgegangen wird. Der geschätzte Umrichteranteil nimmt also linear mit dem Wert des Abweichungsintegrals zu, vorzugsweise von 0 bis 100 % für einen Wert des Abweichungsintegrals von 0 bis 0,5.

Gemäß einer weiteren Ausführungsform wird vorgeschlagen, dass der Umrichteranteil in Abhängigkeit einer Abweichung der Hauptfrequenz von der Netznennfrequenz geschätzt wird, insbesondere so, dass der Umrichteranteil umso höher geschätzt wird, umso weiter die Hauptfrequenz oberhalb der Netznennfrequenz liegt.

Dieser Ausführungsform liegt die Erkenntnis zugrunde, dass häufig bei einem elektrischen Versorgungsnetz, das einen signifikanten Anteil umrichtergeführter Erzeuger aufweist, die Großkraftwerke, also die Einspeiser mit direkt gekoppelten Synchronmaschinen zu einem bestimmten Frequenzausregelungsverhalten neigen. Wenn Windenergieanlagen, Windparks oder andere umrichtergeführte Einspeiseeinheiten eine signifikante Menge an Leistung in das elektrische Versorgungsnetz einspeisen bzw. dies ankündigen, stellen sich besonders die nicht regenerativen Großkraftwerke, die mit einem direkt gekoppelten Synchrongenerator einspeisen, auf die zu erwartende Situation ein. Das bedeutet, dass sie besonders darauf vorbereitet sind, einen Leistungsabfall der regenerativen Einspeiser aufzufangen. Das bedeutet, dass genau dann, wenn dieses Auffangen eines Teils der Leistung aber gar nicht erforderlich ist, wie meistens, sie diese Leistung, also quasi eine Art Reserveleistung, nicht an das elektrische Versorgungsnetz abgeben und dadurch zu einer Drehzahlerhöhung neigen. Wegen eines häufigen Vorrangs regenerativer Einspeiser wird daher auch diese Reserveleistung nicht voll zur Frequenzregelung ausgeschöpft, so dass diese Frequenzabweichung im Sinne einer bleibenden Regelabweichung auftreten kann.

Dies wurde erkannt und es wurde damit erkannt, dass damit eine Hauptfrequenz, die oberhalb der Netznennfrequenz liegt, auf einen hohen Umrichteranteil hindeutet. Entsprechend wird vorzugsweise vorgeschlagen, dass der Umrichteranteil umso höher geschätzt wird, umso weiter die Hauptfrequenz oberhalb der Netznennfrequenz liegt.

Gemäß einer weiteren Ausführungsform wird vorgeschlagen, dass ein Schwankungsspektrum aufgenommen wird. Das Schwankungsspektrum stellt dabei Schwankungen der Frequenz über die Zeit als Frequenzspektrum einer Frequenz, nämlich besonders der Netzfrequenz, dar. Es wird also beispielsweise über einen vorgegebenen Zeitraum von beispielsweise im Bereich von 0,1 bis 2 Sekunden, oder anderweitig, ein Frequenzwert aufgenommen. Im Idealfall, wenn die Netzfrequenz nicht schwankt, würde hierbei nur ein einziger Wert, nämlich die Netznennfrequenz, als konstanter Wert aufgenommen werden. Ein Spektrum, das vorgeschlagene Schwankungsspektrum, würde dann nur einen Gleichanteil aufweisen. Es gäbe also, wenn die Netznennfrequenz bspw. 50 Hz ist, in dem Spektrum nur einen Wert, nämlich 50 Hz bei 0 Hz. Die erfasste Frequenz ist hier also 50 Hz und schwankt nicht. Für diese Betrachtung bilden die hier beispielhaft genannten 50 Hz einen Gleichanteil.

Tatsächlich ist die Netzfrequenz üblicherweise aber nicht konstant, sondern schwankt und diese Schwankungen über die symbolisch genannte Zeit aufgenommen, führen somit zu einer schwankenden Amplitude der Frequenz, mit dem genannten Gleichanteil von beispielsweise 50 Hz. Diese Schwankungen über die Zeit können somit auch als Spektrum untersucht werden. Schwankt die exemplarisch genannte Frequenz von 50 Hz, also beispielsweise innerhalb einer Minute zwölfmal von 49,97 Hz zu 50,03 Hz hin und zurück, so ergibt sich ein Spektralanteil bei 0,2 Hz, nämlich 12/60 s. Die Amplitude dieses Spektralwertes beträgt dabei 0,3 Hz, weil die Schwankungsamplitude eine Schwankung von 49,97 Hz zu 50,03 Hz betrug. Auf ein Diagramm übertragen wird also sowohl an der Abszisse, als auch an der Ordinate jeweils eine Frequenz aufgetragen.

Dazu wird nun vorgeschlagen, dass der Umrichteranteil in Abhängigkeit des Schwankungsspektrums geschätzt wird. Insbesondere wurde erkannt, dass ein solches Frequenzspektrum, also die Art und Weise wie die Frequenz schwankt, wie die Frequenz also von ihrem Idealwert einer konstanten Netznennfrequenz abweicht, ein Charakteristikum des elektrischen Versorgungsnetzes ist, was sich auch hier, wie auch in übrigen Fällen, grundsätzlich auf den betrachteten Netzanschlusspunkt bezieht.

Es wird daher vorgeschlagen, anhand solcher Charakteristika den Umrichteranteil im Netz ebenfalls abzuleiten. Beispielsweise können große direkt gekoppelte Synchrongeneratoren zu einer konstanten Netzpendelung führen, was sich, je Generator, in einem entsprechenden Wert in dem Frequenzspektrum niederschlagen kann. Bei einem hohen Umrichteranteil ist davon auszugehen, dass diese keine solchen Netzpendelungen hervorrufen, sondern eher höherfrequente Signale hervorrufen könnten, die wiederum aufgrund vieler individueller Umrichter entsprechend gestreut sein können. Insoweit ist eher mit einem Rauschverhalten als mit isolierten Pendelfrequenzen in dem Frequenzspektrum, also in dem Schwankungsspektrum, zu rechnen, wenn der Umrichteranteil hoch ist.

Vorzugsweise wird vorgeschlagen, dass der Umrichteranteil in Abhängigkeit wenigstens einer Schwankungsamplitude einer Schwankungsfrequenz des Schwankungsspektrums geschätzt wird. Es wird also wenigstens ein Wert in dem Spektrum betrachtet, nämlich die Schwankungsamplitude, und diese ergibt sich bei einer Frequenz des Spektrums, die hier als Schwankungsfrequenz bezeichnet wird. Somit wird ein isolierter, insbesondere herausragender Wert betrachtet und für den kann ein Vergleichsmaß vorgegeben werden, um davon abhängig den Umrichteranteil zu schätzen.

Vorzugsweise werden aber mehrere solcher Schwankungsamplituden dann jeweils bei einer anderen Schwankungsfrequenz berücksichtigt. Besonders kann auch hier ein Vergleich zu einem Referenzschwankungsspektrum vorgeschlagen werden. Dann kann aus Änderungen zwischen dem jeweils aktuell aufgenommenen Schwankungsspektrum und dem Referenzschwankungsspektrum gut eine Aussage zur Veränderung des elektrischen Versorgungsnetzes auch in Bezug auf den Umrichteranteil getroffen werden.

Vorzugsweise wird vorgeschlagen, dass die Schwankungsfrequenz in einem Bereich von 0,1 Hz bis 0,5 Hz liegt, und vorzugsweise der Umrichteranteil umso kleiner geschätzt wird, umso größer die Schwankungsamplitude hier ist. Dem liegt die Überlegung zugrunde, dass diese Schwankungsamplitude durch wenigstens einen direkt gekoppelten Synchrongenerator hervorgerufen wird, und somit nicht durch einen Umrichter. Je größer also diese Amplitude ist, umso größer ist somit die Dominanz des direkt gekoppelten Synchrongenerators und entsprechend niedriger der Umrichteranteil.

Zur Berechnung dieses Schwankungsspektrums kann eine FFT, also eine sogenannte Fast Fourier Transformation, angewendet werden. Vorzugsweise wird von dem aufgenommenen Frequenzverlauf zunächst der Gleichanteil, also besonders die Netznennfrequenz, wie beispielsweise 50 Hz oder 60 Hz, abgezogen.

Gemäß einer Ausführungsform wird vorgeschlagen, dass ein Spannungsspektrum der Netzspannung über eine FFT der Netzspannung aufgenommen wird und dass der Umrichteranteil in Abhängigkeit dieses Spannungsspektrums geschätzt wird. Es wird also eine Auswertung der Netzspannung über eine Fast Fourier Transformation, die abgekürzt auch als FFT bezeichnet wird, vorgeschlagen. Abhängig dieses Spannungspektrums können Eigenschaften des elektrischen Versorgungsnetzes erkannt werden und daraus kann auf einen Umrichteranteil geschlossen werden.

Vorzugsweise wird der Umrichteranteil umso kleiner geschätzt, je größer ein Maximalwert oder eine Summe mehrerer Maximalwerte, oder auch je größer ein Mittelwert mehrerer Maximalwerte ist. Grundsätzlich ist auch hier ein Maximalwert bei einer Hauptfrequenz, insbesondere bei der Netzfrequenz zu erwarten. Seine Höhe gibt Aufschluss über den Umrichteranteil im Netz und je größer dieser Wert ist, umso kleiner wird der Umrichteranteil geschätzt. Grundsätzlich kann die Auswertung dieses Spannungsspektrums sinngemäß auch so erfolgen, wie dies zur Häufigkeitsfunktion beschrieben wurde, was hiermit auch als Ausführungsformen vorgeschlagen wird. Grundsätzlich ist auch für dieses Spannungsspektrum von einem ganz ähnlichen Verlauf wie bei der Häufigkeitsfunktion auszugehen. Es kann vorteilhaft sein, was hiermit vorgeschlagen wird, ein Referenzspannungsspektrum als Vergleichskurve vorzusehen und sinngemäß solche vergleichenden Auswertungen vorzunehmen, wie dies im Zusammenhang mit der Häufigkeitsfunktion beschrieben wurde.

Durch die Anwendung der FFT, um das Spannungsspektrum zu erhalten, ergeben sich aber zumindest in praktischer Hinsicht Unterschiede. Besonders kann das Aufnehmen einer Häufigkeit oder Häufigkeitsdichte faktisch eine starke Filterung bedeuten, wenn beispielsweise sekundenweise oder über ähnliche Zeitabschnitte Werte aufgenommen werden. Bei der Auswertung über FFT werden stattdessen sehr viele Abtastwerte pro Sekunde verwendet und es wird auch nicht für jeden Abtastwert eine Frequenz bestimmt, sondern es wird die Spannung als Spannungsfunktion abgetastet und aufgenommen und dann in ihrer Gesamtheit ausgewertet. Besonders kann sich ein anschaulich gut erklärbarer Unterschied ergeben. Es kann nämlich bei dem Spannungsspektrum, das über die FFT ermittelt wurde, statt eines Maximalwertes in der Mitte des Spektrums, also bei der Hauptfrequenz, insbesondere bei der Netzfrequenz, ein Verlauf mit zwei Maximalwerten ergeben, die im Wesentlichen bei einer etwas niedrigeren und einer etwas höheren Frequenz als die Hauptfrequenz liegen. Die Hauptfrequenz liegt also zwischen diesen beiden Maximalwerten und bei der Hauptfrequenz selbst stellt sich dann kein Maximalwert ein. Das ist dadurch begründet, dass die Hauptfrequenz häufig nicht exakt getroffen bzw. nicht lange gehalten wird, und vielmehr Frequenzen in der Nähe auftreten, und beim Wechsel von einer etwas höheren zu einer etwas niedrigeren Frequenz diese Hauptfrequenz nur kurzzeitig erreicht wird. Die FFT erfasst diese Feinheiten, die bei der oben beschriebenen Aufnahme von einzelnen Frequenzwerten, um eine Häufigkeit oder Häufigkeitsdichte zu bestimmen, regelmäßig nicht erfasst werden. Dieser Effekt, dass solche zwei Maxima auftreten, kann durch ein Totband einer Primärregelung hervorgerufen werden. Dann treten diese beiden Maxima etwa an den beiden Rändern des Totbandes auf, weil dort erst geregelt wird und dadurch dort erstmals die Frequenz quasi festgehalten wird.

Deshalb wird auch alternativ vorgeschlagen, dass statt der Betrachtung eines Maximalwertes eine Summe mehrerer Maximalwerte, insbesondere zweier Maximalwerte betrachtet wird, oder dass ein Mittelwert mehrerer Maximalwerte betrachtet wird. Wird die Summe mehrerer Maximalwerte durch die Anzahl geteilt, entspricht sie einem Mittelwert und insoweit liegt hier lediglich ein Unterschied einer Skalierung zugrunde. Dabei wird eher vorgeschlagen, den Mittelwert auf die Summe hoch zu skalieren, als die Summe durch Teilen der Anzahl auf den Mittelwert herunter zu skalieren. Dem liegt der Gedanke zugrunde, dass der Mittelwert zweier solcher Maximalwerte, die kurz vor und kurz nach der Hauptfrequenz liegen, deutlich geringer ist als ein einzelner Maximalwert, wie er sich bei der Häufigkeitsfunktion ergibt. Deshalb kann es vorteilhaft sein, tatsächlich die Summe zweier Maximalwerte zu verwenden, die dann eher einem einzelnen Maximalwert entspricht. Letztlich ist es allerdings eine Frage der Skalierung und für die Schätzung des Umrichteranteils kommt es im Wesentlichen auf einen Vergleich mit einem Referenzwert, besonders mit einem Referenzspannungsspektrum an. Solange diese Werte gleich skaliert sind, kommt es auf die Art der Skalierung weniger an.

Vorzugsweise wird als Schätzung des Umrichteranteils zwischen einem hohen und einem niedrigen Umrichteranteil unterschieden und ein hoher Umrichteranteil wird geschätzt, wenn der Maximalwert, die Summe mehrerer Maximalwerte bzw. der Mittelwert mehrerer Maximalwerte unterhalb eines vorgegebenen Referenzwertes liegt. So kann durch diesen Referenzwert eine gut reproduzierbare Schätzung vorgenommen werden. Diese Schätzung ist auch gut in einem Computerprogramm bzw. einer entsprechenden Auswerteeinheit umsetzbar.

Vorzugsweise wird vorgeschlagen, dass die eingespeiste Leistung mittels einer Leistungsregelung in Abhängigkeit einer Frequenzabweichung und/oder in Abhängigkeit eines Frequenzgradienten verändert wird. Außerdem hängt die Leistungsregelung von dem geschätzten Umrichteranteil ab.

Somit kann eine solche frequenzabhängige Leistungsregelung sich auf den Umrichteranteil einstellen und entsprechend der so erfassten Situation angemessen reagieren.

Insbesondere weist die Leistungsregelung eine Reglerverstärkung auf und/oder eine Reglerzeitkonstante, und die Reglerverstärkung bzw. die Reglerzeitkonstante hängt vom geschätzten Umrichteranteil ab. Es wird also vorgeschlagen, dass die beschriebene frequenzabhängige Leistungsregelung unterschiedlich hart eingestellt wird, um dadurch auf die spezielle Netzsituation zu reagieren, nämlich ob ein hoher oder geringer Umrichteranteil im Netz ist.

Besonders wird vorgeschlagen, dass die Reglerverstärkung umso größer gewählt wird und/oder die Reglerzeitkonstante umso kleiner gewählt wird, je größer der geschätzte Umrichteranteil ist. Hier liegt die Erkenntnis zugrunde, dass bei einem hohen Umrichteranteil entsprechend weniger direkt gekoppelte Synchrongeneratoren in das elektrische Versorgungsnetz einspeisen und damit im Grunde weniger Schwungmasse zur Stabilisierung des elektrischen Versorgungsnetzes bereit steht. Das kann dadurch ausgeglichen werden, dass durch eine harte oder schnelle Regelung, also durch eine hohe Reglerverstärkung, schneller auf etwaige Frequenzabweichung oder Änderungen reagiert wird.

Alternativ kann auch auf einen Leistungsregler mit größerer Verstärkung und/oder kleinerer Zeitkonstante umgeschaltet werden, wenn ein hoher Umrichteranteil geschätzt wurde. Durch eine solche Reglerumschaltung, statt eines kontinuierlichen Wechsels kann besonders auch vermieden werden, dass im laufenden Prozess ständig Regelungsverstärkungen verändert werden, was in einem ungünstigen Fall zu einer ungewollten Schwingung führen kann.

Gemäß einer Ausführungsform wird vorgeschlagen, dass in Abhängigkeit des geschätzten Umrichteranteils aus einer vorbereiteten Menge unterschiedlicher Leistungsregler ein Leistungsregler ausgewählt wird, wobei die vorbereitete Menge unterschiedlicher Leistungsregler unterschiedliche Reglerstrukturen und/oder unterschiedliche Frequenz-Leistungs-Kennlinien aufweisen kann.

Mit dieser Lösung kann nicht nur hinsichtlich Verstärkung auf unterschiedliche Netzsituationen reagiert werden, die sich durch einen unterschiedlich hohen Umrichteranteil ergeben, sondern es können auch strukturell andere Regelungen vorgesehen werden. Beispielsweise kann bei einem kleinen Umrichteranteil eine frequenzabhängige Leistungskurve mit Totzeitbereich vorgesehen sein, wohingegen bei einem hohen Umrichteranteil, wenn möglichst schnell auf Änderungen reagiert werden soll, um einen geringeren Anteil von Synchrongeneratoren mit entsprechender Schwungmasse auszugleichen, auf einen solchen Totzeitbereich verzichtet werden kann, oder dieser kleiner gewählt werden kann.

Ein weiteres Beispiel einer unterschiedlichen Reglerstruktur ist, dass bei einem geringen Umrichteranteil für die frequenzabhängige Leistungsregelung ein reiner P-Regler vorgesehen sein kann, der auch eine bleibende Regelabweichung zulässt. Ist aber der Umrichteranteil höher, so dass die Frequenzrückführung zur Nennfrequenz hin durch direkt gekoppelte Synchrongeneratoren geschwächt ist, kann vorgesehen sein, dass die umrichtergeführte Einspeisevorrichtung einen Regler aufweist, insbesondere einen Regler mit einem I-Anteil aufweist, der für die Frequenz eine stationäre Genauigkeit erreichen kann.

Gemäß einer weiteren Ausführungsform wird vorgeschlagen, dass in Abhängigkeit des geschätzten Umrichteranteils eine spannungsprägende Leistungsregelung verwendet wird, oder dass ihr Anteil, also der Anteil der spannungsprägenden Leistungsregelung an der Regelung der eingespeisten Leistung durch eine Gewichtung eingestellt wird. Bei einem geschätzten hohen Umrichteranteil wird somit vorgeschlagen, eine spannungsprägende Leistungsregelung stärker zu gewichten, damit diese stärker eingebracht wird. Eine spannungsprägende Leistungsregelung und damit also auch eine spannungsprägende Einspeisung speist nicht nur spannungsprägend ein, sondern das impliziert auch, dass bei der Regelung unmittelbar auf Spannungsänderungen reagiert wird. Die Regelung ist insoweit bereits systembedingt schneller.

Eine solche spannungsprägende Leistungsregelung bzw. Einspeisung ist besonders hinsichtlich Netzstützung oder Netzstabilisierung schneller als eine stromprägende Einspeisung, die regelmäßig erst indirekt auf Spannungsänderungen reagiert. Somit kann bei einem hohen Umrichteranteil, also bei einem geringen Anteil direkt gekoppelter Synchrongeneratoren durch diese spannungsprägende Leistungsregelung oder Leistungseinspeisung die Spannungsprägung oder Spannungsstützung, die durch nun nicht mehr oder weniger einspeisende direkt gekoppelte Synchrongeneratoren schwächer geworden ist, wieder ausgeglichen werden.

Vorzugsweise wird vorgeschlagen, dass in Abhängigkeit des geschätzten Umrichteranteils eine Leistungsregelung mit virtueller Schwungmasse verwendet wird, oder ihr Anteil an der Regelung der eingespeisten Leistung durch eine Gewichtung eingestellt wird.

Hier liegt die Erkenntnis zugrunde, dass mit Rückgang direkt gekoppelter Synchrongeneratoren auch ihr Regelungseinfluss zurückgeht. Solche direkt gekoppelten Synchrongeneratoren haben ein spezielles, grundsätzlich gut bekanntes Verhalten, das meist stützend auf das elektrische Versorgungsnetz wirkt und zum Ausgleich der Reduzierung solcher direkt gekoppelten Synchrongeneratoren wird somit vorgeschlagen, dass deren Verhalten durch entsprechende Regelung kompensiert wird. Die vorgeschlagene Leistungsregelung mit virtueller Schwungmasse ist somit eine Regelung, die das Verhalten eines direkt gekoppelten Synchrongenerators zumindest teilweise emuliert.

Erfindungsgemäß wird auch eine umrichtergeführte Einspeisevorrichtung, insbesondere eine Windenergieanlage oder ein Windpark vorgeschlagen. Diese umrichtergeführte Einspeisevorrichtung ist zum Einspeisen elektrischer Leistung in ein eine Netzspannung mit einer Netzfrequenz mit einer Netznennfrequenz aufweisendes elektrisches Versorgungsnetz vorgesehen.

Die umrichtergeführte Einspeisevorrichtung umfasst ein Einspeisemittel zum Einspeisen eines Einspeisestroms als elektrischen Wechselstrom mit einer Frequenz, Phase und mit einer Einspeisespannung, eine Steuerungseinrichtung zum Einstellen wenigstens einer der Größen aus der Liste aufweisend:
- eine Frequenz des Einspeisestroms,
- eine Phase des Einspeisestroms,
- eine eingespeiste Leistung und
- eine Einspeisespannung,
- eine Schätzeinrichtung vorbereitet zum Schätzen eines Umrichteranteils eines Netzabschnitts des elektrischen Versorgungsnetzes, wobei
   der Umrichteranteil ein Verhältnis mittels Umrichter eingespeister Leistung zu insgesamt eingespeister Leistung bezeichnet, und
- eine Adaptionseinrichtung zum Anpassen des Steuerns des Einspeisens der elektrischen Leistung in Abhängigkeit des geschätzten Umrichteranteils,
dadurch gekennzeichnet, dass die eingespeiste Leistung mittels einer Leistungsregelung in Abhängigkeit einer Frequenzabweichung und/oder eines Frequenzgradienten verändert wird und die Leistungsregelung von dem geschätzten Umrichteranteil abhängt.

Ein solches Einspeisemittel ist insbesondere als Umrichter oder Wechselrichter ausgebildet. Ein Umrichter weist eingangsseitig eine Wechselspannung auf, wohingegen ein Wechselrichter eingangsseitig eine Gleichspannung aufweist. Ausgangsseitig führen aber beide Einheiten eine Steuerung eines Einspeisestroms durch. Insoweit ist die Einspeisevorrichtung eine umrichtergeführte Einspeisung, weil sie als Einspeisemittel einen Umrichter oder Wechselrichter aufweist. Die umrichtergeführte Einspeisevorrichtung kann aber mehrere, besonders viele solcher Umrichter oder Wechselrichter aufweisen. Selbst wenn die Einspeisevorrichtung nur eine Windenergieanlage ist, kann diese mehrere Umrichter oder Wechselrichter aufweisen. Der Ausgang dieser Umrichter oder Wechselrichter kann beispielsweise parallel geschaltet werden, um dadurch die insgesamt erzeugte Leistung der Windenergieanlage in den Einspeisestrom umzusetzen.

Die Steuerungseinrichtung kann besonders zum Ansteuern des Umrichters oder Wechselrichters vorgesehen sein. Vorzugsweise ist der Umrichter oder Wechselrichter zwischen stromprägendem und spannungsprägendem Betrieb umschaltbar.

Die Steuerungseinrichtung kann diesen Umrichter oder Wechselrichter ansteuern und dadurch besonders Frequenz, Phase und Amplitude eines einzuspeisenden Stroms bei Einhaltung einer entsprechenden Einspeisespannung vorgeben.

Bei Verwendung eines Windparks, der mehrere Windenergieanlagen aufweist und insbesondere über einen gemeinsamen Netzanschlusspunkt in das elektrische Versorgungsnetz einspeist, kann jede Windenergieanlage wenigstens ein Einspeisemittel, also wenigstens einen Umrichter oder einen Wechselrichter, aufweisen und jeweils eine Steuerungseinrichtung aufweisen. Zusätzlich, was auch als Teil der Steuerungseinrichtung verstanden werden kann, kann für den Windpark eine zentrale Parksteuerung vorgesehen sein. Besonders etwaige Auswertungen des Umrichteranteils können zentral von der zentralen Parksteuerung vorgenommen werden.

Außerdem ist eine Schätzeinrichtung vorgesehen, die Teil der zentralen Parksteuerung sein kann, aber auch Teil der Steuerungseinrichtung sein kann. Diese Schätzeinrichtung führt wenigstens eine beschriebene Schätzung eines Umrichteranteils durch.

Ebenfalls ist die Adaptionseinrichtung vorgesehen, die das Steuern des Einspeisens der elektrischen Leistung in Abhängigkeit des geschätzten Umrichteranteils anpasst. Dazu kann gehören, dass sie Parameter verändert und/oder zwischen unterschiedlichen Steuerungsfunktionen oder zwischen unterschiedlichen Kennlinien auswählt. Beispielsweise kann die Adaptionseinrichtung dazu ein entsprechendes Auswahlsignal an die Steuerungseinrichtung oder das Einspeisemittel geben. Grundsätzlich kann aber die Adaptionseinrichtung auch Teil des Einspeisemittels oder der Steuerungseinrichtung sein.

Insbesondere wird vorgeschlagen, dass die umrichtergeführte Einspeisevorrichtung dazu vorbereitet ist, ein Verfahren zum Einspeisen elektrischer Leistung gemäß wenigstens einer vorstehend beschriebenen Ausführungsform ausführen. Besonders ist die Steuerungseinrichtung und außerdem oder alternativ die Adaptionseinrichtung dazu vorbereitet, dies auszuführen. Dazu können entsprechende Algorithmen in der Steuerungseinrichtung und/oder in der Adaptionseinrichtung implementiert sein. Besonders im Falle eines Windparks als umrichtergeführte Einspeisevorrichtung kann eine Implementierung in einer zentralen Parksteuerung vorgesehen sein.

Nachfolgend wird die Erfindung exemplarisch anhand von Ausführungsformen unter Bezugnahme auf die begleitenden Figuren näher erläutert.
- Figur 1: zeigt eine Windenergieanlage in einer perspektivischen Darstellung.
- Figur 2: zeigt einen Windpark in einer schematischen Darstellung.
- Figur 3: zeigt eine umrichtergeführte Einspeisevorrichtung in einer schematischen Darstellung.
- Figur 4: zeigt eine Häufigkeitsfunktion mit einer Referenzfunktion.
- Figur 5: zeigt ein Spannungsspektrum einer Netzspannung veranschaulichend in einem Diagramm.
- Figur 6: zeigt drei Diagramme zur Veranschaulichung eines Schwankungsspektrums.

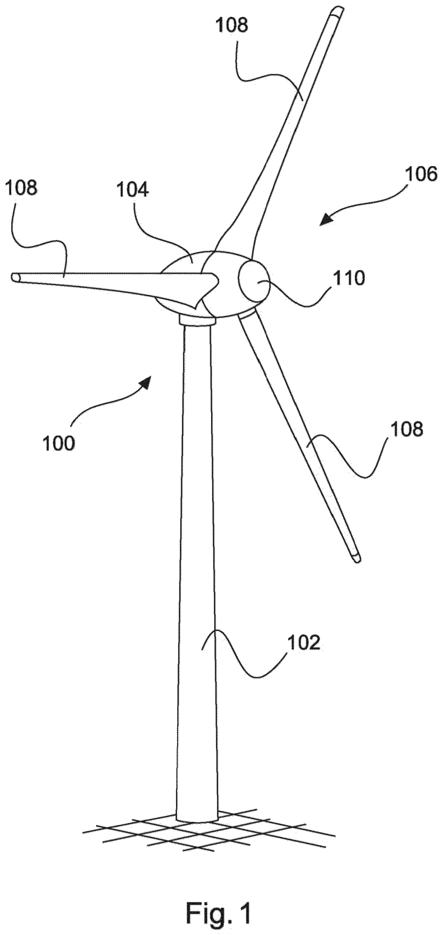

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

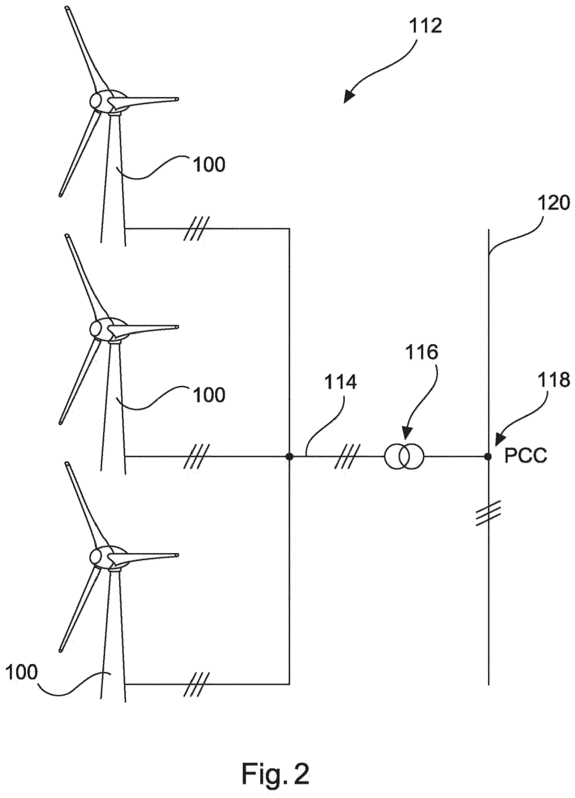

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

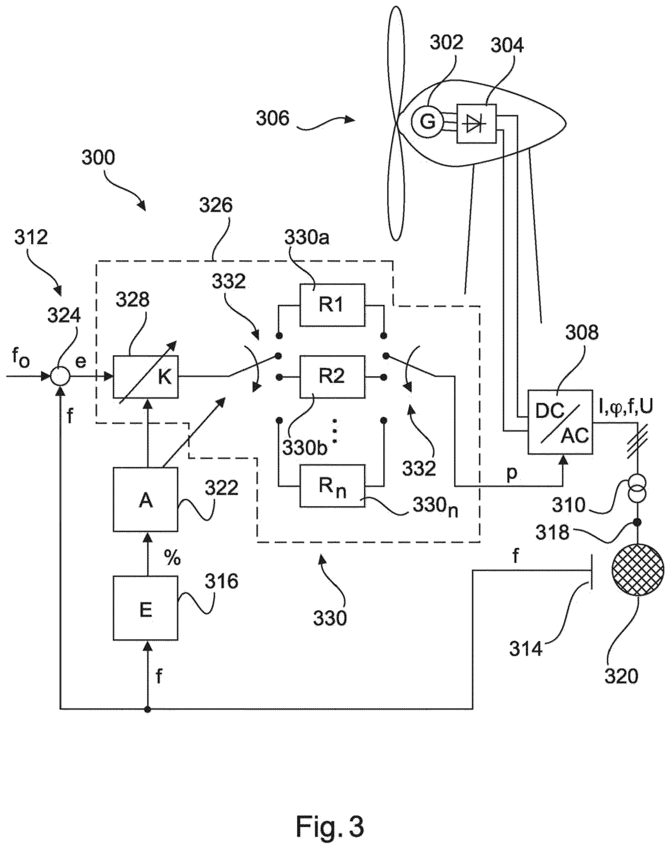

Figur 3 zeigt schematisch eine umrichtergeführte Einspeisevorrichtung 300 zusammen mit einem elektrischen Versorgungsnetz 320, in das die umrichtergeführte Einspeisevorrichtung an einem Netzanschlusspunkt 318 einspeist. Die umrichtergeführte Einspeisevorrichtung 300 ist hier als Windenergieanlage veranschaulicht, mit einem Rotor 306 und einem Generator 302. Im Betrieb erzeugt somit der Generator 302 einen elektrischen mehrphasigen Wechselstrom, der in dem Gleichrichtmittel 304 gleichgerichtet und dem Wechselrichter 308 zugeführt wird. Der Wechselrichter 308 erzeugt dann einen dreiphasigen Wechselstrom I, wobei auch eine Phase ϕ, die Frequenz f und eine Einspeisespannung U vorgegeben wird. Dieser so erzeugte Wechselstrom wird dann über den Transformator 310 am Netzanschlusspunkt 318 in das elektrische Versorgungsnetz 320 eingespeist. Über die Vorgabe des eingespeisten Stroms I, des Phasenwinkels ϕ und der Spannung U bzw. bei Berücksichtigung der Netzspannung U kann somit elektrische Leistung in das elektrische Versorgungsnetz 320 eingespeist werden.

Figur 3 veranschaulicht nun dazu schematisch Details einer Wirkleistungsregelung. Dazu ist eine Regelungsstruktur 312 angedeutet, die grundsätzlich Teil der angedeuteten Windenergieanlage sein kann, in Figur 3 aber zur Veranschaulichung herausgezogen wurde.

Zunächst wird mit einem Messsensor 314 eine Frequenz im elektrischen Versorgungsnetz 320 erfasst. Besonders der Messsensor 314, der eine Frequenz f erfasst, nämlich die Netzfrequenz f, ist hier repräsentativ auch für andere oder weitere Messsensoren zu verstehen. Insbesondere kommt auch in Betracht, dass tatsächlich der Messsensor 314 nur eine Spannung aufnimmt und diese Spannung dann an anderer Stelle ausgewertet werden kann, um daraus die Frequenz abzuleiten. Die Messung kann am Netzanschlusspunkt 318 erfolgen.

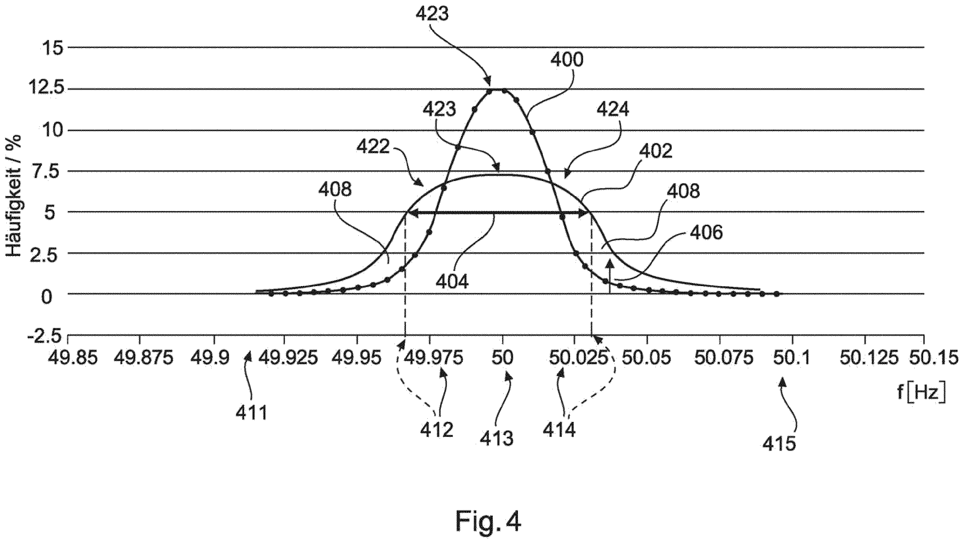

Diese Netzfrequenz f wird gemäß der gezeigten Ausführungsform der Figur 3 für mehrere Zwecke benötigt. Zum einen wird sie in die Schätzeinrichtung 316 eingegeben. In der Schätzeinrichtung 316 wird anhand dieser eingegebenen Netzfrequenz f ein Umrichteranteil im elektrischen Versorgungsnetz 320 geschätzt. Das kann beispielsweise so erfolgen, wie noch nachfolgend im Zusammenhang mit der Figur 4 erläutert wird.

Das Schätzergebnis, also der geschätzte Umrichteranteil im elektrischen Versorgungsnetz 320 wird dann an die Adaptionseinrichtung 322 gegeben, was durch das %-Symbol veranschaulicht ist.

Die Adaptionseinrichtung 322 kann dann Teile der Regelungsstruktur 312 entsprechend des geschätzten Umrichteranteils anpassen.

Zum anderen wird die erfasste Netzfrequenz f für eine frequenzabhängige Leistungsregelung verwendet. Dafür erfolgt in dem Summierglied 324 ein Vergleich mit einer vorgegebenen Referenzfrequenz f₀. Die Regelabweichung e bildet dann den Eingang des eigentlichen Reglers 326. Auch diese Regelungsstruktur mit der Eingabe des Regelfehlers e ist ebenfalls repräsentativ für andere Regelungskonzepte zu verstehen. Beispielsweise kommt in Betracht, dass die erfasste Netzfrequenz f unmittelbar in einen frequenzabhängigen Funktionsblock eingegeben wird, statt dem Summierglied 324 zugeführt zu werden.

Der in Figur 3 veranschaulichte Regler 326 weist eine verstellbare Reglerverstärkung K in dem Verstärkungsblock 328 auf und Reglerfunktionsblöcke 330. Dabei sind mehrere unterschiedliche Reglerfunktionsblöcke 330 a, 330 b bis 330 n vorgesehen, zwischen denen umgeschaltet werden kann. Zum Umschalten ist ein Wählschalter 332 veranschaulichend dargestellt, der aus einem Teil vor und einem Teil hinter den Reglerfunktionsblöcken 330 besteht. Dieser Wählschalter 332 kann von der Adaptionseinrichtung 322 angesteuert werden. Dieser Wählschalter 332 ist dabei auch insoweit repräsentativ für andere Realisierungen zu sehen, nämlich insbesondere eine Realisierung, bei der innerhalb eines Prozessrechners zwischen unterschiedlichen Regelungsblöcken und damit unterschiedlichen Regelungsfunktionalitäten umgeschaltet werden kann.

Auch der Verstärkungsblock 328 kann von der Adaptionseinrichtung 322 angesteuert werden. Alternativ kann der Verstärkungsblock 328 jeweils Teil der Reglerfunktionsblöcke 330 sein. Es kommt aber auch in Betracht, dass die Adaptionseinrichtung 322 sowohl einen Verstärkungsfaktor K verändert, nämlich durch Ansteuern des Verstärkungsblocks 328 oder anderweitig, und außerdem zwischen einem Reglerfunktionsblock der Reglerfunktionsblöcke 330 auswählt. Dadurch ist eine größere Flexibilität beim Anpassen des jeweiligen Reglers möglich. Die entsprechende Ansteuerung zum Verändern des Verstärkungsfaktors K bzw. zum Umschalten zwischen Reglerfunktionsblöcken 330 erfolgt somit in Abhängigkeit eines geschätzten Umrichteranteils.

Mit der jeweils gewählten Reglereinstellung, also dem eingestellten Verstärkungsfaktor des Verstärkungsblocks 328 und der ausgewählten Reglerfunktion gemäß dem ausgewählten Reglerblock eines der Regelungsblöcke 330 ist dann eine frequenzabhängige Wirkleistungssteuerung realisiert. Der Regler 326 gibt somit in Abhängigkeit der erfassten Netzfrequenz, hier nämlich in Abhängigkeit des Reglerfehlers e, eine Wirkleistung P aus und diese Wirkleistung P wird an den Wechselrichter 308 gegeben, der dann entsprechend den Einspeisestrom I erzeugt.

Figur 4 zeigt ein Diagramm einer Häufigkeit bzw. Häufigkeitsdichte, in dem die Häufigkeit in Prozent über die Frequenz in Hertz aufgetragen ist. Das Diagramm gibt damit an, welche Frequenzwerte prozentual wie oft aufgetreten sind. Dazu ist eine Häufigkeitsmesskurve aufgenommen worden, die hier auch als Referenzkurve bzw. Referenzfunktion 400 eingezeichnet ist. Die gezeigte Referenzfunktion 400 ist für ein elektrisches Versorgungsnetz ohne Umrichteranteil aufgenommen worden, also mit einem Umrichteranteil gleich null. Weiterhin ist eine mögliche Häufigkeitsfunktion 402 eingezeichnet, die einer aktuellen Häufigkeitsfunktion bei hohem Umrichteranteil im elektrischen Versorgungsnetz entspricht. Sowohl die Referenzfunktion 400 als auch die aktuelle Häufigkeitsfunktion 402 sind durch einige Frequenzwerte gekennzeichnet, nämlich mit aufsteigender Frequenz zunächst die Anfangsfrequenz 411, dann die untere Referenzfrequenz 412, gefolgt von der Hauptfrequenz 413, weiter gefolgt von der oberen Referenzfrequenz 414 und schließlich der Endfrequenz 415. Im Bereich der Hauptfrequenz 413 weist sowohl die Referenzfunktion 400 als auch die aktuelle Häufigkeitsfunktion 402 jeweils einen Häufigkeitsmaximalwert 423 bzw. 423' auf.

Zur unteren Referenzfrequenz 412 und zur oberen Referenzfrequenz 414 kann jeweils ein unterer Häufigkeitsreferenzwert 422 bzw. oberer Häufigkeitsreferenzwert 424 zugeordnet werden. Weder die untere und obere Referenzfrequenz 412 bzw. 414, noch der zugehörige untere Häufigkeitsreferenzwert 422 bzw. obere Häufigkeitsreferenzwert 424 müssen für die Referenzfunktion 400 und die Häufigkeitsfunktion 402 gleich sein. Je nach Auswertung können die Frequenzwerte oder die Häufigkeitsreferenzwerte zwischen der Referenzfunktion 400 und der Häufigkeitsfunktion 402 unterschiedlich sein.

Neben der Auswertung der Amplitude des Häufigkeitsmaximalwertes 423 bzw. 423', kommen noch andere Auswertungsvarianten in Betracht.

Eine Auswertungsvariante schlägt vor, dass die Breite 404 der Häufigkeitsfunktion 402 betrachtet wird. Die Breite 404 wird vorzugsweise an einem festen Häufigkeitswert betrachtet, im vorliegenden Fall wird hierfür der Häufigkeitswert von 5 % verwendet. Die eingezeichnete Breite 404 ist insoweit zur Veranschaulichung eingetragen worden. Es kommt auch in Betracht, diesen beispielhaften Wert von 5 % sowohl als oberen als auch als unteren Häufigkeitsreferenzwert 422 bzw. 424 zu verwenden und dazu die sich einstellende untere bzw. obere Referenzfrequenz 412 bzw. 414 zu betrachten und zum Bestimmen des Abstandes die Differenz dieser beiden Werte zu verwenden.

Gemäß einer anderen Ausführungsform kommt in Betracht, im Bereich außerhalb der beiden Referenzfrequenzen 412, 414, also für Bereiche unterhalb der unteren Referenzfrequenz 412 und oberhalb der oberen Referenzfrequenz 414, eine Abweichung der erfassten Häufigkeitsfunktion 402 gegenüber der Referenzfunktion 400 nach oben zu betrachten. Eine solche Erhöhung in diesem Bereich ist durch den symbolisierenden Erhöhungspfeil 406 angedeutet. Hierzu kann beispielsweise auch ein entsprechender Frequenzwert betrachtet werden. Beispielsweise kommt in Betracht, dass hierzu die obere Referenzfrequenz 414 auf einen höheren, aber vorbestimmten Wert gelegt wird, und ebenso die untere Referenzfrequenz 412 auf einen tieferen Wert gelegt wird, was hier nicht ausdrücklich eingezeichnet ist, aber im Bereich der gestrichelten Linie sein kann.

Es kommt auch in Betracht, eine Integralfläche 408 zu betrachten, nämlich die Fläche, die unterhalb der erfassten Häufigkeitsfunktion 402 und oberhalb der Referenzfunktion 400 liegt. Im Wesentlichen ist es somit der Bereich oberhalb der oberen Referenzfrequenz und unterhalb der unteren Referenzfrequenz 414 bzw. 412, wenn diese beiden Referenzfrequenzen entsprechend wie in Figur 4 mit den nicht gestrichelten Pfeilen dargestellt definiert sind.

Dieses Integral bzw. diese beiden Integrale zusammen können als Abweichungsintegral oder Abweichungsintegralwert erfasst und mit einem Referenzwert oder einer Referenzskala verglichen werden, um daraus einen Umrichteranteil im Netz zu schätzen.

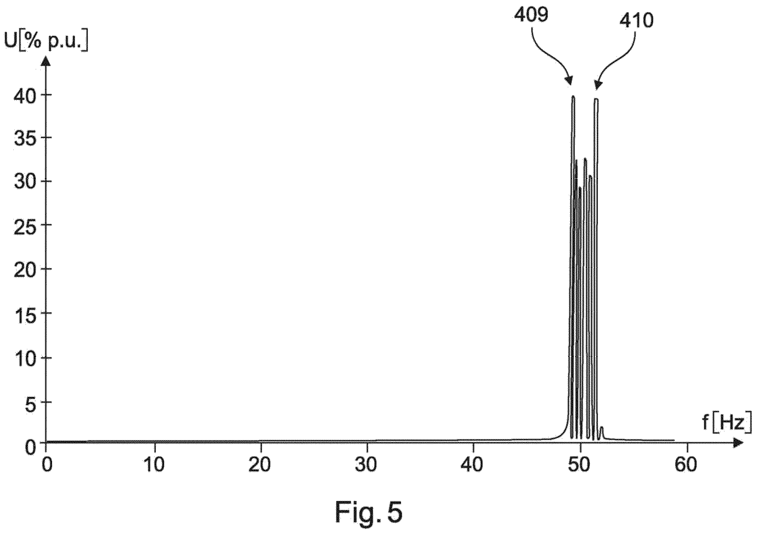

Als weitere Variante kommt in Betracht, eine FFT der Netzspannung U aufzunehmen. Das Ergebnis ist ein Spannungsspektrum, zu dem ein Beispiel in Figur 5 eingetragen ist. Dem Beispiel der Figur 5 liegt ein elektrisches Versorgungsnetz mit einer Nennfrequenz von 50 Hz zugrunde, was hier auch in etwa die Hauptfrequenz ist.

Besonders ist in dem Spannungsspektrum der Figur 5 zu erkennen, dass sich dieses im Wesentlichen um den Wert von 50 Hz gruppiert. Dabei gibt es aber genau bei 50 Hz, also genau bei der Nennfrequenz bzw. Hauptfrequenz, keinen singulären Häufigkeitsmaximalwert, sondern hier zwei die Nennfrequenz bzw. Hauptfrequenz flankierende lokale Maximalwerte 409 und 410. Zur Schätzung eines Umrichteranteils im Netz können diese beiden lokalen Maxima bzw. lokalen Maximalwerte ausgewertet werden und aus ihnen kann ein gemeinsamer Maximalwert gebildet werden, beispielsweise durch Aufsummieren oder Mittelwertbildung. Dieser kann dann einer Schätzung des Umrichteranteils zugrundegelegt werden.

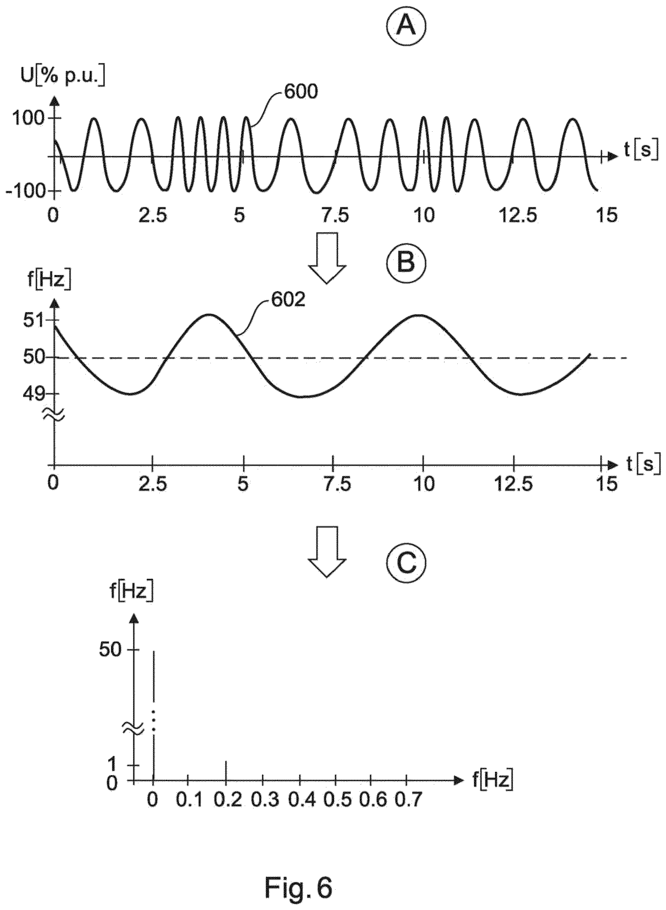

Eine noch weitere Variante, die mit den bisher beschriebenen auch kombiniert werden kann, besteht in der Auswertung eines Schwankungsspektrums. Zur Veranschaulichung enthält die Figur 6 drei Diagramme A bis C.

Das erste Diagramm A veranschaulicht einen Spannungsverlauf, beispielsweise am Netzanschlusspunkt 318 gemäß Fig. 3. Dieser Spannungsverlauf ist schematisch zu verstehen und soll etwa einen Sinusverlauf mit schwankenden Frequenzen symbolisieren. Die Spannungskurve 600 weist daher, in überzeichneter Weise, verschieden lange Periodendauern auf. Die Spannungskurve 600 erinnert daher an eine Ziehharmonika. Jedenfalls soll dort verdeutlicht werden, dass diese Spannungskurve 600 in ihren Sinusverläufen über die Zeit t schwankt. Die Zeit t ist in dem Diagramm A von 0 bis 15 Sekunden aufgezeichnet. In dieser Zeit wechselt die Spannungskurve 600 etwa zweieinhalbmal zwischen langer und kurzer Periodendauer hin und her. Ihre Frequenz schwankt also in diesen 15 Sekunden etwa zweieinhalbmal hin und her.

Dies kann als ein Frequenzverlauf über die Zeit dargestellt werden, was in dem Diagramm B veranschaulicht ist. Das Diagramm B zeigt somit eine Frequenzkurve 602 über die Zeit. Es wird davon ausgegangen, dass sich ohne Frequenzschwankung eine feste Frequenz von 50 Hz eingestellt hätte. Insoweit wird nochmals wiederholt, dass das Diagramm A veranschaulichend ist. Tatsächlich ist, von den Schwankungen abgesehen, in dem Diagramm A ein Signal mit etwa 1 Hz gezeigt. Es wird dennoch davon ausgegangen, dass das Signal eine Grundfrequenz von 50 Hz aufweist, und insoweit das Diagramm A mit den etwa sinusförmigen Formen nur ein 50 Hz - Signal symbolisieren soll.

Jedenfalls ist in dem Diagramm B zu erkennen, dass die Frequenzkurve 602 um diese Hauptfrequenz von 50 Hz schwingt.

Dieses schwingende Signal, also diese schwingende Frequenzkurve 602 kann nun als Spektrum ausgewertet werden. Da in dem Diagramm B die Frequenz in Abhängigkeit der Zeit untersucht wird, ergibt sich bei der Übertragung in ein Spektrum eine Frequenz in Abhängigkeit einer Frequenz.

Das Diagramm C zeigt dieses zugehörige Frequenzspektrum. In dem Diagramm C ist also die Frequenz in Hz über die Frequenz in Hz abgetragen. Es ergibt sich ein Wert gemäß der Abszisse bei 0 Hz und dort beträgt die Amplitude 50 Hz. Die Grundschwingung hat also eine Amplitude von 50 Hz und sie verändert sich nicht und liegt deswegen bei 0 Hz. Außerdem schwankt die Frequenzkurve 602 des Diagramms B aber um diesen 50 Hz - Wert. Diese Schwankung ist so, dass sie von 49 bis 51 Hz schwankt. Die Schwankungsamplitude beträgt also 1 Hz. Außerdem schwankt sie zweimal in 10 Sekunden hin und her, so dass sich eine Frequenz von 0,2 Hz ergibt. Diese Schwankung der Frequenzkurve 602 des Diagramms B ist in der Spektraldarstellung des Diagramms C somit ein Wert mit der Amplitude 1 Hz bei einer Frequenz von 0,2 Hz.

Insoweit ist diese Untersuchung des Schwankungsspektrums auch eine niederfrequente Untersuchung. Diagramm C der Figur 6 ist aber ebenfalls nur veranschaulichend zu verstehen und grundsätzlich ist bei einer solchen Untersuchung des Schwankungsspektrums nicht nur mit einem einzigen Spektralwert zu rechnen, sondern mit mehreren Spektralwerten. Jedenfalls kann aus solchen Spektralwerten des im Diagramm C veranschaulichten Frequenzspektrums ein Rückschluss auf den Umrichteranteil im Netz gezogen werden. Besonders wird vorgeschlagen, dass der Umrichteranteil umso kleiner geschätzt wird, umso größer die Schwankungsamplituden sind. Die Schwankungsamplitude des Signals der Figur 6 ist gemäß der Darstellung im Diagramm C 1 Hz und ihr Wert liegt bei 0,2 Hz.

## Patentansprüche

1. Verfahren zum Einspeisen elektrischer Leistung in ein eine Netzspannung (U) mit einer Netzfrequenz (f) mit einer Netznennfrequenz aufweisendes elektrisches Versorgungsnetz (320), mittels einer umrichtergeführten Einspeisevorrichtung (300), insbesondere mittels eines Windparks (112) oder einer Windenergieanlage (100), wobei
- die Einspeisevorrichtung zum Einspeisen der elektrischen Leistung einen Einspeisestrom (I) als elektrischen Wechselstrom (I) mit einer Frequenz (f), Phase (ϕ) und mit einer Einspeisespannung (U) einspeist und wenigstens eine der Größen aus der Liste aufweisend
- Frequenz (f) des Einspeisestroms (I),
- Phase (ϕ) des Einspeisestroms (I),
- eingespeiste Leistung und
- Einspeisespannung (U)
einstellbar ist, umfassend die Schritte
- Schätzen eines Umrichteranteils eines Netzabschnitts des elektrischen Versorgungsnetzes (320), wobei
der Umrichteranteil ein Verhältnis mittels Umrichter eingespeister Leistung zu insgesamt eingespeister Leistung bezeichnet, und
- Steuern des Einspeisens der elektrischen Leistung in Abhängigkeit des geschätzten Umrichteranteils,
**dadurch gekennzeichnet, dass** die eingespeiste Leistung mittels einer Leistungsregelung in Abhängigkeit einer Frequenzabweichung und/oder eines Frequenzgradienten verändert wird und die Leistungsregelung von dem geschätzten Umrichteranteil abhängt.

2. Verfahren nach Anspruch 1,
**dadurch gekennzeichnet, dass**
- eine zyklische Änderung der Netzfrequenz (f) nach Amplitude und/oder Zyklusdauer erfasst wird und
- der Umrichteranteil in Abhängigkeit der erfassten Amplitude und/oder der erfassten Zyklusdauer geschätzt, wobei vorzugsweise
- der Umrichteranteil umso größer geschätzt wird, je größer die Amplitude der zyklischen Änderung ist und/oder
- der Umrichteranteil umso größer geschätzt wird, je kleiner die Zyklusdauer ist, wobei insbesondere
- der Umrichteranteil in Abhängigkeit von einem Quotienten der Amplitude der Änderungen zur Zyklusdauer der Änderungen geschätzt wird.

3. Verfahren nach Anspruch 2,
**dadurch gekennzeichnet, dass** als Schätzung des Umrichteranteils zwischen einem hohen und einem niedrigen Umrichteranteil unterschieden wird und
- ein hoher Umrichteranteil geschätzt wird, wenn die Amplitude der zyklischen Änderung größer als eine vorgegebene Amplitudengrenze ist, und/oder
- ein hoher Umrichteranteil geschätzt wird, wenn die Zyklusdauer kleiner als eine vorgegebene Zyklusdauergrenze ist.

4. Verfahren nach einem der vorstehenden Ansprüche,
**dadurch gekennzeichnet, dass**
- eine Häufigkeit oder Häufigkeitsdichte der Frequenz (f) oder eines Frequenzgradienten erfasst wird, und
- der Umrichteranteil in Abhängigkeit der erfassten Häufigkeit bzw. Häufigkeitsdichte geschätzt wird.

5. Verfahren nach Anspruch 4,
**dadurch gekennzeichnet, dass** die Häufigkeit oder Häufigkeitsdichte eine Häufigkeitsfunktion (402) in Abhängigkeit der Frequenz (f) bildet, und diese Häufigkeitsfunktion (402)
- in einem Bereich einer Hauptfrequenz (413), insbesondere der Netznennfrequenz, einen Häufigkeitsmaximalwert (423, 423') aufweist,
- von einer vorgegebenen Anfangsfrequenz, die kleiner als die Hauptfrequenz (413) ist, zum Bereich der Hauptfrequenz (413) ansteigt,
- vom Bereich der Hauptfrequenz (413) zu einer vorgegebenen Endfrequenz (415), die größer als die Hauptfrequenz (413) ist, abfällt,
- zu einer unteren Referenzfrequenz (412), die größer als die Anfangsfrequenz (411) und kleiner als die Hauptfrequenz (413) ist, einen unteren Häufigkeitsreferenzwert (422) aufweist,
- zu einer oberen Referenzfrequenz (414), die größer als die Hauptfrequenz (413) und kleiner als die Endfrequenz (415) ist, einen oberen Häufigkeitsreferenzwert (424) aufweist, wobei
der Umrichteranteil in Abhängigkeit des Häufigkeitsmaximalwertes (423, 423') geschätzt wird und außerdem oder alternativ
der Umrichteranteil
- in Abhängigkeit eines Abstandes zwischen der unteren und oberen Referenzfrequenz (412, 414) geschätzt wird, die sich jeweils bei einem vorgegebenen unteren bzw. oberen Häufigkeitsreferenzwert (422, 424) einstellt, wobei der untere und obere Häufigkeitsreferenzwert (422, 424) gleich sein können, und/oder
- in Abhängigkeit des unteren und/oder oberen Häufigkeitsreferenzwertes (422, 424) geschätzt wird, der sich jeweils für eine vorgegebene untere bzw. obere Referenzfrequenz (412, 414) einstellt.

6. Verfahren nach Anspruch 5,
**dadurch gekennzeichnet, dass**
- der Umrichteranteil umso größer geschätzt wird, je geringer der Häufigkeitsmaximalwert (423, 423') ist, und/oder
- der Umrichteranteil umso größer geschätzt wird, je größer der Abstand zwischen der oberen und unteren Referenzfrequenz (414, 412) ist, bzw.
- der Umrichteranteil umso größer geschätzt wird, je größer der obere bzw. der untere Häufigkeitsreferenzwert (424, 422) ist.

7. Verfahren nach Anspruch 5 oder 6,
**dadurch gekennzeichnet, dass** als Schätzung des Umrichteranteils zwischen einem hohen und einem niedrigen Umrichteranteil unterschieden wird und
- ein hoher Umrichteranteil geschätzt wird, wenn der Häufigkeitsmaximalwert (423, 423') unterhalb eines vorgegebenen Häufigkeitsgrenzwertes liegt, und/oder
- ein hoher Umrichteranteil geschätzt wird, wenn der Abstand zwischen der oberen und unteren Referenzfrequenz (414, 412) größer als ein vorgegebener Referenzabstand ist, bzw.
- ein hoher Umrichteranteil geschätzt wird, wenn der obere und/oder untere Häufigkeitsreferenzwert (424, 422) oberhalb eines vorgegebenen Basisgrenzwertes liegt.

8. Verfahren nach einem der vorstehenden Ansprüche,
**dadurch gekennzeichnet, dass** für die Häufigkeit oder Häufigkeitsdichte eine Referenzfunktion (400) vorgegeben wird und der Umrichteranteil in Abhängigkeit einer Abweichung der Häufigkeitsfunktion (402) von dieser Referenzfunktion (400) geschätzt wird, insbesondere,
- dass als Referenzfunktion (400) eine Häufigkeitsfunktion (402) für einen Umrichteranteil von null gewählt wird, und/oder
- dass als eine Differenzfunktion eine Differenz zwischen der Häufigkeitsfunktion (402) und der Referenzfunktion (400) gebildet wird und
- die Differenzfunktion für Frequenzbereiche unterhalb der unteren Referenzfrequenz (412) und oberhalb der oberen Referenzfrequenz (414) zu einem Abweichungsintegral aufintegriert wird und/oder dass
- nur die positiven Bereiche der Differenzfunktion zu einem Abweichungsintegral aufintegriert werden
- der Umrichteranteil in Abhängigkeit des Abweichungsintegrals geschätzt wird.

9. Verfahren nach einem der vorstehenden Ansprüche,
**dadurch gekennzeichnet, dass** der Umrichteranteil in Abhängigkeit einer Abweichung der Hauptfrequenz (413) von der Netznennfrequenz geschätzt wird, insbesondere so, dass der Umrichteranteil umso höher geschätzt wird, umso weiter die Hauptfrequenz (413) oberhalb der Netznennfrequenz liegt.

10. Verfahren nach einem der vorstehenden Ansprüche,
**dadurch gekennzeichnet, dass**
- ein Schwankungsspektrum aufgenommen wird, wobei das Schwankungsspektrum Schwankungen der Frequenz (f) über die Zeit (t) als Frequenzspektrum einer Frequenz (f), insbesondere der Netzfrequenz (f) darstellt, und
- der Umrichteranteil in Abhängigkeit des Schwankungsspektrums geschätzt wird.

11. Verfahren nach Anspruch 10,
**dadurch gekennzeichnet, dass**
- der Umrichteranteil in Abhängigkeit wenigstens einer Schwankungsamplitude einer Schwankungsfrequenz des Schwankungsspektrums geschätzt wird, wobei insbesondere
- die Schwankungsfrequenz in einem Bereich von 0,1 Hz bis 0,5Hz liegt, wobei vorzugsweise
- der Umrichteranteil umso kleiner geschätzt wird, je größer die Schwankungsamplitude ist.

12. Verfahren nach einem der vorstehenden Ansprüche,
**dadurch gekennzeichnet, dass** ein Spannungsspektrum der Netzspannung (U) über eine FFT der Netzspannung (U) aufgenommen wird und der Umrichteranteil, in Abhängigkeit des Spannungsspektrums geschätzt wird, insbesondere, dass der Umrichteranteil umso kleiner geschätzt wird, je größer ein Maximalwert (409, 410) oder eine Summe mehrerer Maximalwerte oder ein Mittelwert mehrerer Maximalwerte sind und/oder, dass
- als Schätzung des Umrichteranteils zwischen einem hohen und einem niedrigen Umrichteranteil unterschieden wird, und
- ein hoher Umrichteranteil geschätzt wird, wenn der Maximalwert (409, 410), die Summe mehrerer Maximalwerte oder der Mittelwert mehrerer Maximalwerte unterhalb eines vorgegebenen Referenzwertes liegt.

13. Verfahren nach einem der vorstehenden Ansprüche,
**dadurch gekennzeichnet, dass**
- die Leistungsregelung eine Reglerverstärkung (K) aufweist und/oder eine Reglerzeitkonstante aufweist und die Reglerverstärkung (K) bzw. die Reglerzeitkonstante vom geschätzten Umrichteranteil abhängt, insbesondere, dass
- die Reglerverstärkung (K) umso größer gewählt wird bzw. die Reglerzeitkonstante umso kleiner gewählt wird, je größer der geschätzte Umrichteranteil ist, oder
- dass dann, wenn ein hoher Umrichteranteil geschätzt wurde, auf einen Leistungsregler mit größerer Verstärkung und/oder kleinerer Reglerzeitkonstante umgeschaltet wird, als wenn ein niedriger Umrichteranteil geschätzt wurde.

14. Verfahren nach einem der vorstehenden Ansprüche,
**dadurch gekennzeichnet, dass** in Abhängigkeit des geschätzten Umrichteranteils aus einer vorbereiteten Menge unterschiedlicher Leistungsregler ein Leistungsregler ausgewählt wird, wobei die vorbereitete Menge unterschiedlicher Leistungsregler unterschiedliche Reglerstrukturen und/oder unterschiedliche Frequenz-Leistungs-Kennlinien aufweisen und/oder,
dass in Abhängigkeit des geschätzten Umrichteranteils eine spannungsprägende Leistungsregelung verwendet wird oder ihr Anteil an der Regelung der eingespeisten Leistung durch eine Gewichtung eingestellt wird und/oder,
dass in Abhängigkeit des geschätzten Umrichteranteils eine Leistungsregelung mit virtueller Schwungmasse verwendet wird oder ihr Anteil an der Regelung der eingespeisten Leistung durch eine Gewichtung eingestellt wird.

15. Umrichtergeführte Einspeisevorrichtung (300), insbesondere Windenergieanlage (100) oder Windpark (112), zum Einspeisen elektrischer Leistung in ein eine Netzspannung (U) mit einer Netzfrequenz (f) mit einer Netznennfrequenz aufweisendes elektrisches Versorgungsnetz (320), umfassend
- ein Einspeisemittel zum Einspeisen eines Einspeisestroms (I) als elektrischen Wechselstrom (I) mit einer Frequenz (f), Phase (ϕ) und mit einer Einspeisespannung (U),
- eine Steuerungseinrichtung zum Einstellen wenigstens einer der Größen aus der Liste aufweisend
- eine Frequenz (f) des Einspeisestroms (I),
- eine Phase ϕ des Einspeisestroms (I),
- eine eingespeiste Leistung und
- eine Einspeisespannung (U),
- eine Schätzeinrichtung (316) vorbereitet zum Schätzen eines Umrichteranteils eines Netzabschnitts des elektrischen Versorgungsnetzes (320), wobei der Umrichteranteil ein Verhältnis mittels Umrichter eingespeister Leistung zu insgesamt eingespeister Leistung bezeichnet, und
- eine Adaptionseinrichtung (322) zum Anpassen des Steuerns des Einspeisens der elektrischen Leistung in Abhängigkeit des geschätzten Umrichteranteils,
**dadurch gekennzeichnet, dass** die eingespeiste Leistung mittels einer Leistungsregelung in Abhängigkeit einer Frequenzabweichung und/oder eines Frequenzgradienten verändert wird und die Leistungsregelung von dem geschätzten Umrichteranteil abhängt, insbesondere, dass sie dazu vorbereitet ist, insbesondere, dass die Steuerungseinrichtung und/oder die Adaptionseinrichtung (322) dazu vorbereitet sind, ein Verfahren nach einem der Ansprüche 1 bis 14 auszuführen.
